# EUROPEAN PATENT APPLICATION

(11) **EP 4 730 086 A1**
(43) Date of publication of application: **22.04.2026**
(21) Application number: 24845783.0
(22) Date of filing: 03.06.2024
(51) Int. Cl.: G06F 3/01, G06F 3/04842, G06F 1/16, G02B 27/00, G02B 27/01

(54) **ELECTRONIC DEVICE, METHOD, AND COMPUTER-READABLE STORAGE MEDIUM FOR DISPLAYING VISUAL OBJECT RELATED TO APPLICATION IN VIRTUAL SPACE**

(30) Priority: 24.07.2023 KR 20230096421; 25.09.2023 KR 20230128332
(71) Applicant: Samsung Electronics Co., Ltd., Suwon-si, Gyeonggi-do 16677 (KR)
(72) Inventor: KIM, Sangheon, Suwon-si, Gyeonggi-do 16677 (KR); KIM, Youngjung, Suwon-si, Gyeonggi-do 16677 (KR); PARK, Miji, Suwon-si, Gyeonggi-do 16677 (KR); PARK, Hungi, Suwon-si, Gyeonggi-do 16677 (KR); AN, Jinwan, Suwon-si, Gyeonggi-do 16677 (KR); LEE, Sangyong, Suwon-si, Gyeonggi-do 16677 (KR); LEE, Jiwoo, Suwon-si, Gyeonggi-do 16677 (KR)
(74) Representative: Nederlandsch Octrooibureau
(86) International application number: PCT/KR2024/007588
(87) International publication number: WO 2025/023479

(57) **Abstract**

According to an embodiment, a wearable device may comprise: a display; at least one sensor; a memory for storing instructions; and at least one processor. The at least one processor may be configured to, when the instructions are executed: identify at least one application being executed in a first virtual space, while the first virtual space is displayed; switch the first virtual space to a second virtual space on the basis of the execution of a first application; identify a second application executed in the first virtual space among the at least one application, while the second virtual space is displayed; identify a motion of the wearable device while displaying a first portion of the second virtual space on the basis of a first direction in which a user's gaze is directed; and display a visual object related to the second application in a second portion of the second virtual space on the basis of a second direction in which the user's gaze is directed, the second direction being changed from the first direction according to the motion of the wearable device.

## Description

### [Technical Field]

The following descriptions relate to an electronic device, a method, and a computer readable storage medium for displaying a visual object related to an application in a virtual space.

### [Background Art]

In order to provide an enhanced user experience, an electronic device that provides augmented reality (AR) and/or virtual reality (VR) services that display information generated by a computer in connection with an external object in the real-world is being developed. The electronic device may be a wearable device that may be worn by a user. For example, the electronic device may be AR glasses and/or a head-mounted device (HMD).

The above-described information may be provided as a related art for a purpose of helping understanding of the present disclosure. No claim or determination is raised as to whether any of the above-described descriptions may be applied as a prior art related to the present disclosure.

### [Disclosure]

### [Technical Solution]

According to an embodiment, a wearable device may include a display, at least one sensor, memory storing instructions, and at least one processor. The instructions, when individually or collectively executed by the at least one processor, may cause the wearable device to, while a first virtual space is displayed, identify at least one application being executed in the first virtual space. The instructions, when individually or collectively executed by the at least one processor, may cause the wearable device to identify an input for executing a first application in the first virtual space. The instructions, when individually or collectively executed by the at least one processor, may cause the wearable device to, based on the execution of the first application, switch the first virtual space to a second virtual space provided according to the first application. The instructions, when individually or collectively executed by the at least one processor, may cause the wearable device to, while the second virtual space is displayed, identify a second application executed in the first virtual space among the at least one application. The at least processor, when the instructions are executed, may cause the wearable device to identify a motion of the wearable device during displaying a first portion of the second virtual space based on a first direction in which a user's gaze is directed. The at least processor, when the instructions are executed, may cause the wearable device to display a visual object related to the second application in a second portion of the second virtual space based on a second direction in which the user's gaze is directed changed from the first direction according to the motion of the wearable device.

According to an embodiment, a method of a wearable device may include, while a first virtual space is displayed, identifying at least one application being executed in the first virtual space. The method may include identifying an input for executing a first application in the first virtual space. The method may include, based on the execution of the first application, switching the first virtual space to a second virtual space provided according to the first application. The method may include, while the second virtual space is displayed, identifying a second application executed in the first virtual space among the at least one application. The method may include identifying a motion of the wearable device during displaying a first portion of the second virtual space based on a first direction in which a user's gaze is directed. The method may include displaying a visual object related to the second application in a second portion of the second virtual space based on a second direction in which the user's gaze is directed changed from the first direction according to the motion of the wearable device.

According to an embodiment, a non-transitory computer readable storage medium may store one or more programs. The one or more programs may include instructions, which, when executed by at least one processor of an electronic device with a display and at least one sensor, cause the wearable device to, while a first virtual space is displayed, identify at least one application being executed in the first virtual space. The one or more programs may include instructions, which, when executed by the at least one processor of the wearable device, cause the wearable device to identify an input for executing a first application in the first virtual space. The one or more programs may include instructions, which, when executed by the at least one processor of the wearable device, cause the wearable device to, based on the execution of the first application, switch the first virtual space to a second virtual space provided according to the first application. The one or more programs may include instructions, which, when executed by the at least one processor of the wearable device, cause the wearable device to, while the second virtual space is displayed, identify a second application executed in the first virtual space among the at least one application. The one or more programs may include instructions, which, when executed by the at least one processor of the wearable device, cause the wearable device to identify a motion of the wearable device during displaying a first portion of the second virtual space based on a first direction in which a user's gaze is directed. The one or more programs may include instructions, which, when executed by the at least one processor of the wearable device, cause the wearable device to display a visual object related to the second application in a second portion of the second virtual space based on a second direction in which the user's gaze is directed changed from the first direction according to the motion of the wearable device.

### [Description of the Drawings]

FIG. 1 is a block diagram of an electronic device in a network environment according to an embodiment.
FIGS. 2A and 2B illustrate an example of a perspective view of a wearable device according to an embodiment.
FIGS. 3A and 3B illustrate an example of an exterior of a wearable device according to an embodiment.
FIG. 4 illustrates an example of a block diagram of a wearable device according to an embodiment.
FIG. 5A illustrates an example of a virtual space displayed through a display, according to an embodiment.
FIG. 5B illustrates an example of a portion of a virtual space displayed according to a direction of a user's gaze, according to an embodiment.
FIG. 6 illustrates an example of a virtual space for executing at least one application, according to an embodiment.
FIG. 7 illustrates an example of a virtual space for providing an interface related to an application, according to an embodiment.
FIG. 8A illustrates an example in which a virtual space is switched, according to an embodiment.
FIG. 8B illustrates an example in which a virtual space is switched, according to an embodiment.
FIG. 9 illustrates a flowchart related to an operation of a wearable device according to an embodiment.
FIG. 10A illustrates an example of an operation of a wearable device for displaying a visual object related to a second application in a second virtual space, according to an embodiment.
FIG. 10B illustrates an example of an operation of a wearable device for displaying a visual object related to a second application in a second virtual space, according to an embodiment.
FIG. 11 illustrates an example of an operation of a wearable device for displaying a visual object related to a second application in a second virtual space, according to an embodiment.
FIG. 12A illustrates an example of an operation of a wearable device for displaying a visual object related to a second application in a second virtual space, according to an embodiment.
FIG. 12B illustrates an example of an operation of a wearable device for displaying a visual object related to a second application in a second virtual space, according to an embodiment.
FIG. 13 illustrates an example of an operation of a wearable device for displaying a visual object related to a second application in a second virtual space, according to an embodiment.
FIG. 14 illustrates an example of an operation of a wearable device for displaying a visual object related to a second application in a second virtual space, according to an embodiment.
FIG. 15 illustrates an example of an operation of a wearable device for displaying an application being executed in a first virtual space, according to an embodiment.
FIG. 16 illustrates an example of an operation of a wearable device for displaying an application being executed in a first virtual space, according to an embodiment.

### [Mode for Invention]

Hereinafter, an embodiment of the present disclosure will be described in detail with reference to a drawing such that those having ordinary knowledge in the art to which the present disclosure belongs may easily implement the present disclosure. However, the present disclosure may be implemented in several different forms and is not limited to the embodiment described herein. In association with a description of the drawing, the same or similar reference numerals may be used for the same or similar components. In addition, in the drawing and the associated description, a description of well-known functions and configurations may be omitted for clarity and brevity.

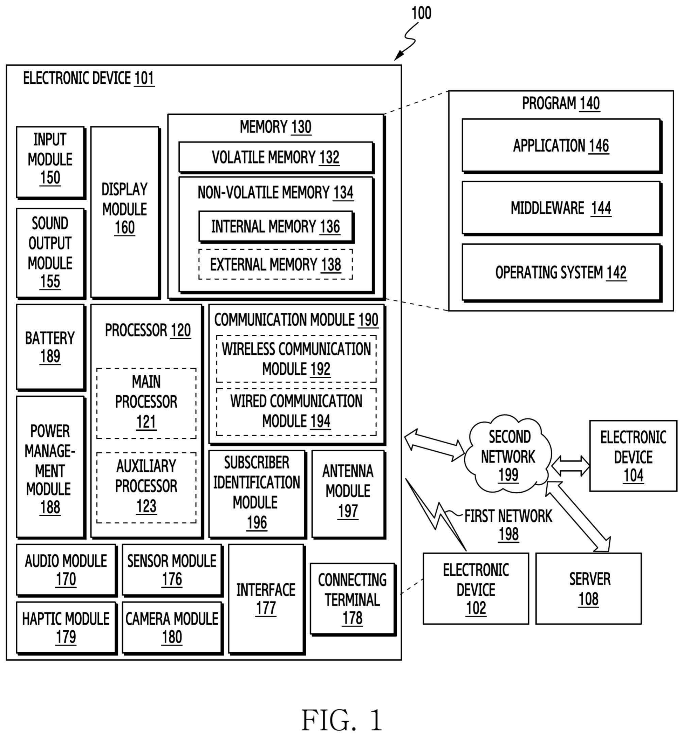

FIG. 1 is a block diagram of an electronic device in a network environment according to an embodiment.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101.

The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

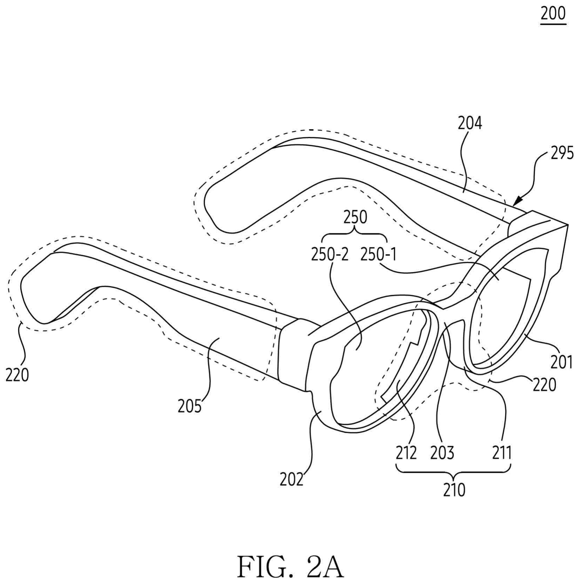

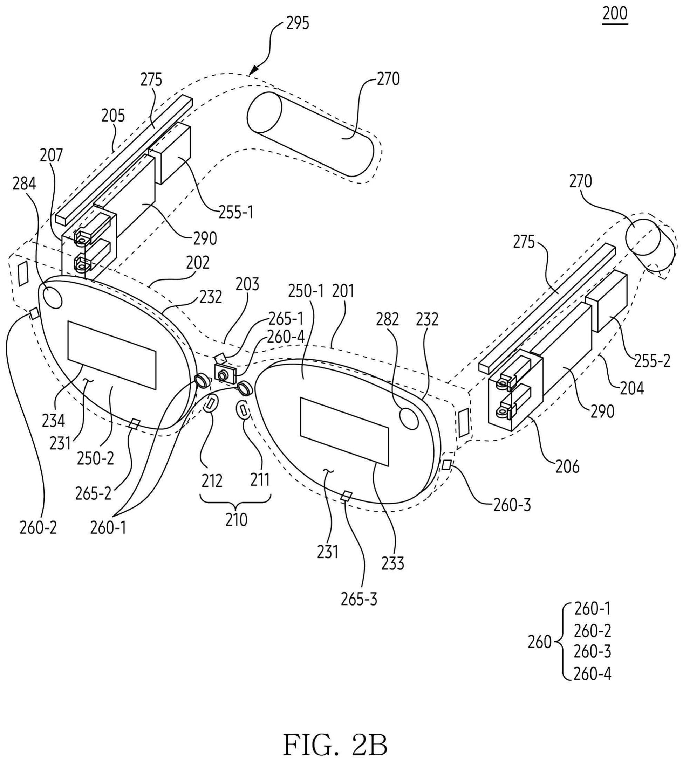

FIGS. 2A and 2B illustrate an example of a perspective view of a wearable device according to an embodiment.

According to an embodiment, a wearable device 200 may have a form of glasses that is wearable on a body part (e.g., head) of a user. The wearable device 200 of FIGS. 2A to 2B may be an example of the electronic device 101 of FIG. 1. The wearable device 200 may include a head-mounted display (HMD). For example, a housing of the wearable device 200 may include a flexible material such as rubber and/or silicone having a form closely attached to a portion of the user's head (for example, a portion of a face surrounding two eyes). For example, the housing of the wearable device 200 may include one or more straps able to be twined around the user's head, and/or one or more temples attachable to ears of the head.

Referring to FIG. 2a, according to an embodiment, the wearable device 200 may include at least one display 250 and a frame 295 supporting the at least one display 250.

According to an embodiment, the wearable device 200 may be wearable on a portion of the user's body. The wearable device 200 may provide augmented reality (AR), virtual reality (VR), or mixed reality (MR) combining the augmented reality and the virtual reality to a user wearing the wearable device 200. For example, the wearable device 200 may display a virtual reality image provided from at least one optical device 282 and 284 of FIG. 2B on at least one display 250, in response to a user's preset gesture obtained through a motion recognition camera 260-2 and 260-3 of FIG. 2B.

According to an embodiment, the at least one display 250 may provide visual information to a user. For example, the at least one display 250 may include a transparent or translucent lens. The at least one display 250 may include a first display 250-1 and/or a second display 250-2 spaced apart from the first display 250-1. For example, the first display 250-1 and the second display 250-2 may be disposed at positions corresponding to the user's left and right eyes, respectively.

Referring to FIG. 2B, the at least one display 250 may provide visual information transmitted through a lens included in the at least one display 250 from ambient light to a user and other visual information distinguished from the visual information2. The lens may be formed based on at least one of a fresnel lens, a pancake lens, or a multi-channel lens. For example, the at least one display 250 may include a first surface 231 and a second surface 232 opposite to the first surface 231. A display area may be formed on the second surface 232 of at least one display 250. When the user wears the wearable device 200, ambient light may be transmitted to the user by being incident on the first surface 231 and being penetrated through the second surface 232. For another example, the at least one display 250 may display an augmented reality image in which a virtual reality image provided by the at least one optical device 282 and 284 is combined with a reality screen transmitted through ambient light, on a display area formed on the second surface 232.

In an embodiment, the at least one display 250 may include at least one waveguide 233 and 234 that transmits light transmitted from the at least one optical device 282 and 284 by diffracting to the user. The at least one waveguide 233 and 234 may be formed based on at least one of glass, plastic, or polymer. A nano pattern may be formed on at least a portion of the outside or inside of the at least one waveguide 233 and 234. The nano pattern may be formed based on a grating structure having a polygonal or curved shape. Light incident to an end of the at least one waveguide 233 and 234 may be propagated to another end of the at least one waveguide 233 and 234 by the nano pattern. The at least one waveguide 233 and 234 may include at least one of at least one diffraction element (e.g., a diffractive optical element (DOE), a holographic optical element (HOE)), and a reflection element (e.g., a reflection mirror). For example, the at least one waveguide 233 and 234 may be disposed in the wearable device 200 to guide a screen displayed by the at least one display 250 to the user's eyes. For example, the screen may be transmitted to the user's eyes based on total internal reflection (TIR) generated in the at least one waveguide 233 and 234.

The wearable device 200 may analyze an object included in a real image collected through a photographing camera 260-4, combine with a virtual object corresponding to an object that becomes a subject of augmented reality provision among the analyzed object, and display on the at least one display 250. The virtual object may include at least one of text and images for various information associated with the object included in the real image. The wearable device 200 may analyze the object based on a multi-camera such as a stereo camera. For the object analysis, the wearable device 200 may execute space recognition (e.g., simultaneous localization and mapping (SLAM)) using the multi-camera and/or time-of-flight (ToF) . The user wearing the wearable device 200 may watch an image displayed on the at least one display 250.

According to an embodiment, a frame 295 may be configured with a physical structure in which the wearable device 200 may be worn on the user's body. According to an embodiment, the frame 295 may be configured so that when the user wears the wearable device 200, the first display 250-1 and the second display 250-2 may be positioned corresponding to the user's left and right eyes. The frame 295 may support the at least one display 250. For example, the frame 295 may support the first display 250-1 and the second display 250-2 to be positioned at positions corresponding to the user's left and right eyes.

Referring to FIG. 2A, according to an embodiment, the frame 295 may include an area 220 at least partially in contact with the portion of the user's body in case that the user wears the wearable device 200. For example, the area 220 of the frame 295 in contact with the portion of the user's body may include an area in contact with a portion of the user's nose, a portion of the user's ear, and a portion of the side of the user's face that the wearable device 200 contacts. According to an embodiment, the frame 295 may include a nose pad 210 that is contacted on the portion of the user's body. When the wearable device 200 is worn by the user, the nose pad 210 may be contacted on the portion of the user's nose. The frame 295 may include a first temple 204 and a second temple 205, which are contacted on another portion of the user's body that is distinct from the portion of the user's body.

For example, the frame 295 may include a first rim 201 surrounding at least a portion of the first display 250-1, a second rim 202 surrounding at least a portion of the second display 250-2, a bridge 203 disposed between the first rim 201 and the second rim 202, a first pad 211 disposed along a portion of the edge of the first rim 201 from one end of the bridge 203, a second pad 212 disposed along a portion of the edge of the second rim 202 from the other end of the bridge 203, the first temple 204 extending from the first rim 201 and fixed to a portion of the wearer's ear, and the second temple 205 extending from the second rim 202 and fixed to a portion of the ear opposite to the ear. The first pad 211 and the second pad 212 may be in contact with the portion of the user's nose, and the first temple 204 and the second temple 205 may be in contact with a portion of the user's face and the portion of the user's ear. The temples 204 and 205 may be rotatably connected to the rim through hinge units 206 and 207 of FIG. 2B. The first temple 204 may be rotatably connected with respect to the first rim 201 through the first hinge unit 206 disposed between the first rim 201 and the first temple 204. The second temple 205 may be rotatably connected with respect to the second rim 202 through the second hinge unit 207 disposed between the second rim 202 and the second temple 205. According to an embodiment, the wearable device 200 may identify an external object (e.g., a user's fingertip) touching the frame 295 and/or a gesture performed by the external object by using a touch sensor, a grip sensor, and/or a proximity sensor formed on at least a portion of the surface of the frame 295.

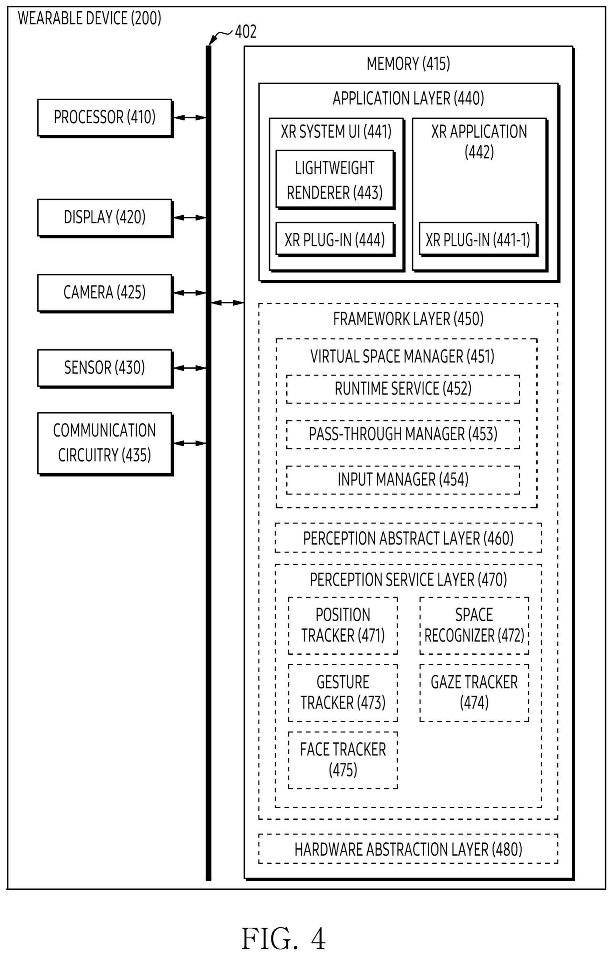

According to an embodiment, the wearable device 200 may include hardware (e.g., hardware to be described later based on the block diagram of FIG. 4) that performs various functions. For example, the hardware may include a battery module 270, an antenna module 275, the at least one optical device 282 and 284, speakers (e.g., speakers 255-1 and 255-2), a microphone (e.g., microphones 265-1, 265-2, and 265-3), a light emitting module (not illustrated), and/or a printed circuit board (PCB) 290 (e.g., printed circuit board). Various hardware may be disposed in the frame 295.

According to an embodiment, the microphone (e.g., the microphones 265-1, 265-2, and 265-3) of the wearable device 200 may obtain a sound signal, by being disposed on at least a portion of the frame 295. The first microphone 265-1 disposed on the bridge 203, the second microphone 265-2 disposed on the second rim 202, and the third microphone 265-3 disposed on the first rim 201 are illustrated in FIG. 2B, but the number and disposition of the microphone 265 are not limited to an embodiment of FIG. 2B. In case that the number of the microphone 265 included in the wearable device 200 is two or more, the wearable device 200 may identify a direction of the sound signal by using a plurality of microphones disposed on different portions of the frame 295.

According to an embodiment, the at least one optical device 282 and 284 may project a virtual object on the at least one display 250 in order to provide various image information to the user. For example, the at least one optical device 282 and 284 may be a projector. The at least one optical device 282 and 284 may be disposed adjacent to the at least one display 250 or may be included in the at least one display 250 as a portion of the at least one display 250. According to an embodiment, the wearable device 200 may include a first optical device 282 corresponding to the first display 250-1, and a second optical device 284 corresponding to the second display 250-2. For example, the at least one optical device 282 and 284 may include the first optical device 282 disposed at a periphery of the first display 250-1 and the second optical device 284 disposed at a periphery of the second display 250-2. The first optical device 282 may transmit light to the first waveguide 233 disposed on the first display 250-1, and the second optical device 284 may transmit light to the second waveguide 234 disposed on the second display 250-2.

In an embodiment, a camera 260 may include the photographing camera 260-4, an eye tracking camera (ET CAM) 260-1, and/or the motion recognition camera 260-2 and 260-3. The photographing camera 260-4, the eye tracking camera 260-1, and the motion recognition camera 260-2 and 260-3 may be disposed at different positions on the frame 295 and may perform different functions. The eye tracking camera 260-1 may output data indicating a position of eye or a gaze of the user wearing the wearable device 200. For example, the wearable device 200 may detect the gaze from an image including the user's pupil obtained through the eye tracking camera 260-1. The wearable device 200 may identify an object (e.g., a real object, and/or a virtual object) focused by the user, by using the user's gaze obtained through the eye tracking camera 260-1. The wearable device 200 identifying the focused object may execute a function (e.g., gaze interaction) for interaction between the user and the focused object. The wearable device 200 may represent a portion corresponding to eye of an avatar indicating the user in the virtual space, by using the user's gaze obtained through the eye tracking camera 260-1. The wearable device 200 may render an image (or a screen) displayed on the at least one display 250, based on the position of the user's eye. For example, visual quality (e.g., resolution, brightness, saturation, grayscale, and PPI) of a first area related to the gaze within the image and visual quality of a second area distinguished from the first area may be different. The wearable device 200 may obtain an image having the visual quality of the first area matching the user's gaze and the visual quality of the second area by using foveated rendering. For example, when the wearable device 200 supports an iris recognition function, user authentication may be performed based on iris information obtained using the eye tracking camera 260-1. An example in which the eye tracking camera 260-1 is disposed toward the user's right eye is illustrated in FIG. 2B, but the embodiment is not limited thereto, and the eye tracking camera 260-1 may be disposed alone toward the user's left eye or may be disposed toward two eyes.

In an embodiment, the photographing camera 260-4 may photograph a real image or background to be matched with a virtual image in order to implement the augmented reality or mixed reality content. The photographing camera 260-4 may be used to obtain an image having a high resolution based on a high resolution (HR) or a photo video (PV). The photographing camera 260-4 may photograph an image of a specific object existing at a position viewed by the user and may provide the image to the at least one display 250. The at least one display 250 may display one image in which a virtual image provided through the at least one optical device 282 and 284 is overlapped with information on the real image or background including an image of the specific object obtained by using the photographing camera 260-4. The wearable device 200 may compensate for depth information (e.g., a distance between the wearable device 200 and an external object obtained through a depth sensor), by using an image obtained through the photographing camera 260-4. The wearable device 200 may perform object recognition through an image obtained using the photographing camera 260-4. The wearable device 200 may perform a function (e.g., auto focus) of focusing an object (or subject) within an image and/or an optical image stabilization (OIS) function (e.g., an anti-shaking function) by using the photographing camera 260-4. While displaying a screen representing a virtual space on the at least one display 250, the wearable device 200 may perform a pass through function for displaying an image obtained through the photographing camera 260-4 overlapping at least a portion of the screen. In an embodiment, the photographing camera 260-4 may be disposed on the bridge 203 disposed between the first rim 201 and the second rim 202.

The eye tracking camera 260-1 may implement a more realistic augmented reality by matching the user's gaze with the visual information provided on the at least one display 250, by tracking the gaze of the user wearing the wearable device 200. For example, when the user looks at the front, the wearable device 200 may naturally display environment information associated with the user's front on the at least one display 250 at a position where the user is positioned. The eye tracking camera 260-1 may be configured to capture an image of the user's pupil in order to determine the user's gaze. For example, the eye tracking camera 260-1 may receive gaze detection light reflected from the user's pupil and may track the user's gaze based on the position and movement of the received gaze detection light. In an embodiment, the eye tracking camera 260-1 may be disposed at a position corresponding to the user's left and right eyes. For example, the eye tracking camera 260-1 may be disposed in the first rim 201 and/or the second rim 202 to face the direction in which the user wearing the wearable device 200 is positioned.

The motion recognition camera 260-2 and 260-3 may provide a specific event to the screen provided on the at least one display 250 by recognizing the movement of the whole or portion of the user's body, such as the user's torso, hand, or face. The motion recognition camera 260-2 and 260-3 may obtain a signal corresponding to motion by recognizing the user's motion (e.g., gesture recognition), and may provide a display corresponding to the signal to the at least one display 250. The processor may identify a signal corresponding to the operation and may perform a preset function based on the identification. The motion recognition camera 260-2 and 260-3 may be used to perform simultaneous localization and mapping (SLAM) for 6 degrees of freedom pose (6 dof pose) and/or a space recognition function using a depth map. The processor may perform a gesture recognition function and/or an object tracking function, by using the motion recognition camera 260-2 and 260-3. In an embodiment, the motion recognition camera 260-2 and camera 260-3 may be disposed on the first rim 201 and/or the second rim 202.

The camera 260 included in the wearable device 200 is not limited to the above-described eye tracking camera 260-1 and the motion recognition camera 260-2 and 260-3. For example, the wearable device 200 may identify an external object included in the FoV by using a camera disposed toward the user's FoV. The wearable device 200 identifying the external object may be performed based on a sensor for identifying a distance between the wearable device 200 and the external object, such as a depth sensor and/or a time of flight (ToF) sensor. The camera 260 disposed toward the FoV may support an autofocus function and/or an optical image stabilization (OIS) function. For example, in order to obtain an image including a face of the user wearing the wearable device 200, the wearable device 200 may include the camera 260 (e.g., a face tracking (FT) camera) disposed toward the face.

Although not illustrated, the wearable device 200 according to an embodiment may further include a light source (e.g., LED) that emits light toward a subject (e.g., user's eyes, face, and/or an external object in the FoV) photographed by using the camera 260. The light source may include an LED having an infrared wavelength. The light source may be disposed on at least one of the frame 295, and the hinge units 206 and 207.

According to an embodiment, the battery module 270 may supply power to electronic components of the wearable device 200. In an embodiment, the battery module 270 may be disposed in the first temple 204 and/or the second temple 205. For example, the battery module 270 may be a plurality of battery modules 270. The plurality of battery modules 270, respectively, may be disposed on each of the first temple 204 and the second temple 205. In an embodiment, the battery module 270 may be disposed at an end of the first temple 204 and/or the second temple 205.

The antenna module 275 may transmit the signal or power to the outside of the wearable device 200 or may receive the signal or power from the outside. In an embodiment, the antenna module 275 may be disposed in the first temple 204 and/or the second temple 205. For example, the antenna module 275 may be disposed close to one surface of the first temple 204 and/or the second temple 205.

The speaker 255 may output a sound signal to the outside of the wearable device 200. A sound output module may be referred to as a speaker. In an embodiment, the speaker 255 may be disposed in the first temple 204 and/or the second temple 205 in order to be disposed adjacent to the ear of the user wearing the wearable device 200. For example, the speaker 255 may include a second speaker 255-2 disposed adjacent to the user's left ear by being disposed in the first temple 204, and a first speaker 255-1 disposed adjacent to the user's right ear by being disposed in the second temple 205.

The light emitting module (not illustrated) may include at least one light emitting element. The light emitting module may emit light of a color corresponding to a specific state or may emit light through an operation corresponding to the specific state in order to visually provide information on a specific state of the wearable device 200 to the user. For example, when the wearable device 200 requires charging, it may emit red light at a constant cycle. In an embodiment, the light emitting module may be disposed on the first rim 201 and/or the second rim 202.

Referring to FIG. 2B, according to an embodiment, the wearable device 200 may include the printed circuit board (PCB) 290. The PCB 290 may be included in at least one of the first temple 204 or the second temple 205. The PCB 290 may include an interposer disposed between at least two sub PCBs. On the PCB 290, one or more hardware (e.g., hardware illustrated by different blocks of FIG. 4) included in the wearable device 200 may be disposed. The wearable device 200 may include a flexible PCB (FPCB) for interconnecting the hardware.

According to an embodiment, the wearable device 200 may include at least one of a gyro sensor, a gravity sensor, and/or an acceleration sensor for detecting the posture of the wearable device 200 and/or the posture of a body part (e.g., a head) of the user wearing the wearable device 200. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 200 may identify the user's motion and/or gesture performed to execute or stop a specific function of the wearable device 200 based on the IMU.

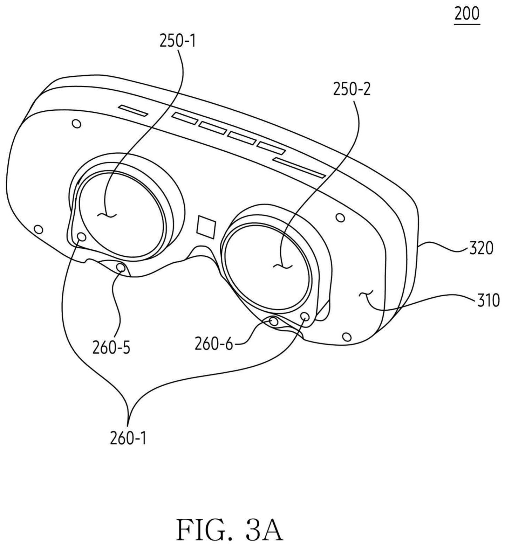

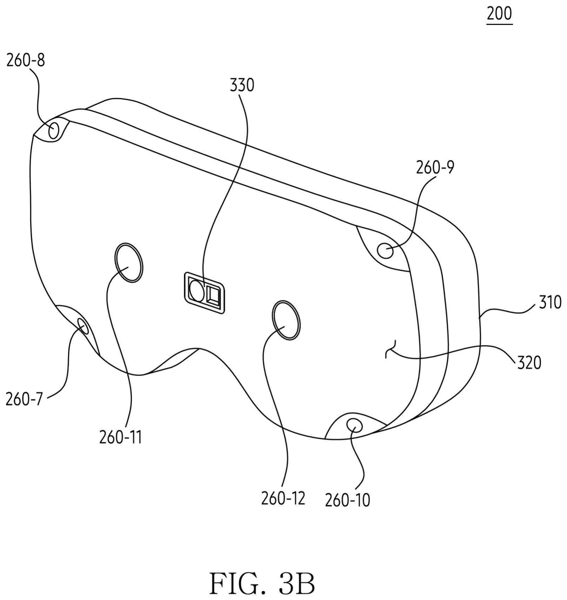

FIGS. 3A and 3B illustrate an example of an exterior of a wearable device according to an embodiment. A wearable device 300 of FIGS. 3A and 3B may be an example of the electronic device 101 of FIG. 1 and the wearable device 200 of FIGS. 2A and 2B. According to an embodiment, an example of an exterior of a first surface 310 of a housing of the wearable device 200 is illustrated in FIG. 3A, and an example of an exterior of a second surface 320 opposite to the first surface 310 may be illustrated in FIG. 3B.

Referring to FIG. 3A, according to an embodiment, the first surface 310 of the wearable device 200 may have an attachable shape on the user's body part (e.g., the user's face). Although not illustrated, the wearable device 200 may further include a strap for being fixed on the user's body part, and/or one or more temples (e.g., the first temple 204 and/or the second temple 205 of FIGS. 2A to 2B). A first display 250-1 for outputting an image to the left eye among the user's two eyes and a second display 250-2 for outputting an image to the right eye among the user's two eyes may be disposed on the first surface 310. The wearable device 200 may further include rubber or silicon packing, which are formed on the first surface 310, for preventing interference by light (e.g., ambient light) different from the light emitted from the first display 250-1 and the second display 250-2.

According to an embodiment, the wearable device 200 may include camera 260-1 for photographing and/or tracking two eyes of the user adjacent to each of the first display 250-1 and the second display 250-2. The camera 260-1 may be referred to as the gaze tracking camera 260-1 of FIG. 2B. According to an embodiment, the wearable device 200 may include cameras 260-5 and 260-6 for photographing and/or recognizing the user's face. The cameras 260-5 and 260-6 may be referred to as a FT camera. The wearable device 200 may control an avatar representing a user in a virtual space, based on a motion of the user's face identified using the cameras 260-5 and 260-6. For example, the wearable device 200 may change a texture and/or a shape of a portion (e.g., a portion of an avatar representing a human face) of the avatar, by using information obtained by the cameras 260-5 and 260-6 (e.g., the FT camera) and representing the facial expression of the user wearing the wearable device 200.

Referring to FIG. 3B, a camera (e.g., cameras 260-7, 260-8, 260-9, 260-10, 260-11, and 260-12), and/or a sensor (e.g., the depth sensor 330) for obtaining information associated with the external environment of the wearable device 200 may be disposed on the second surface 320 opposite to the first surface 310 of FIG. 3A. For example, the cameras 260-7, 260-8, 260-9, and 260-10 may be disposed on the second surface 320 in order to recognize an external object. The cameras 260-7, 260-8, 260-9, and 260-10 may be referred to as the motion recognition cameras 260-2 and 260-3 of FIG. 2B.

For example, by using cameras 260-11 and 260-12, the wearable device 200 may obtain an image and/or video to be transmitted to each of the user's two eyes. The camera 260-11 may be disposed on the second surface 320 of the wearable device 200 to obtain an image to be displayed through the second display 250-2 corresponding to the right eye among the two eyes. The camera 260-12 may be disposed on the second surface 320 of the wearable device 200 to obtain an image to be displayed through the first display 250-1 corresponding to the left eye among the two eyes. The cameras 260-11 and 260-12 may be referred to as the photographing camera 260-4 of FIG. 2B.

According to an embodiment, the wearable device 200 may include the depth sensor 330 disposed on the second surface 320 in order to identify a distance between the wearable device 200 and the external object. By using the depth sensor 330, the wearable device 200 may obtain spatial information (e.g., a depth map) about at least a portion of the FoV of the user wearing the wearable device 200. Although not illustrated, a microphone for obtaining sound outputted from the external object may be disposed on the second surface 320 of the wearable device 200. The number of microphones may be one or more according to embodiments.

FIG. 4 illustrates an example of a block diagram of a wearable device according to an embodiment. Referring to FIG. 4, a wearable device 200 according to an embodiment may include at least one of a processor 410, memory 415, a display 420, a camera 425, a sensor 430, or communication circuitry 435. The processor 410, the memory 415, the display 420, the camera 425, the sensor 430, and the communication circuitry 435 may be electronically and/or operably coupled with each other by an electronical component such as a communication bus 402. A type and/or the number of hardware components included in the wearable device 200 is not limited to as illustrated in FIG. 4. For example, the wearable device 200 may include only some of the hardware components illustrated in FIG. 4. Elements (e.g., layers and/or modules) in memory described below may be in a state of logically being divided. However, it is not limited thereto.

The processor 410 of the wearable device 200 according to an embodiment may include a hardware component for processing data based on one or more instructions. The hardware component for processing data may include, for example, an arithmetic and logic unit (ALU), a field programmable gate array (FPGA), and/or a central processing unit (CPU). The number of processor 410 may be one or more. For example, the processor 410 may have a structure of a multi-core processor such as a dual core, a quad core, or a hexa core.

The memory 415 of the wearable device 200 according to an embodiment may include a hardware component for storing data and/or instructions inputted to and/or outputted from the processor 410. The memory 415 may include, for example, a volatile memory such as a random-access memory (RAM) and/or a non-volatile memory such as a read-only memory (ROM). The volatile memory may include, for example, at least one of a dynamic RAM (DRAM), a static RAM (SRAM), a Cache RAM, and a pseudo SRAM (PSRAM). The non-volatile memory may include, for example, at least one of a programmable ROM (PROM), an erasable PROM (EPROM), an electrically erasable PROM (EEPROM), a flash memory, a hard disk, a compact disk, and an embedded multi media card (eMMC).

In an embodiment, the display 420 of the wearable device 200 may output visualized information to a user of the wearable device 200. For example, the display 420 may output visualized information to the user by being controlled by the processor 410 including circuitry such as a graphic processing unit (GPU). The display 420 may include a flat panel display (FPD) and/or electronic paper. The FPD may include a liquid crystal display (LCD), a plasma display panel (PDP), and/or one or more light emitting diodes (LEDs). The LED may include an organic LED (OLED).

In an embodiment, the camera 425 of the wearable device 200 may include one or more optical sensors (e.g., a charged coupled device (CCD) sensor and a complementary metal oxide semiconductor (CMOS) sensor) that generate an electrical signal indicating a color and/or brightness of light. A plurality of optical sensors included in the camera 425 may be disposed in a form of a 2-dimensional array. The camera 425 may generate 2D frame data corresponding to light reaching the optical sensors of the 2D array by obtaining electrical signals of each of the plurality of optical sensors substantially simultaneously. For example, photo data captured using the camera 425 may mean a 2D frame data obtained from the camera 425. For example, video data captured using the camera 425 may mean a sequence of a plurality of 2D frame data obtained from the camera 425 along a frame rate. The camera 425 may further include a flash light that is disposed toward a direction in which the camera 425 receives light and outputs light toward the direction.

The wearable device 200 according to an embodiment may include a plurality of cameras disposed toward different directions as an example of the camera 425. Among the plurality of cameras, a first camera may be referred to as a motion recognition camera (e.g., the motion recognition cameras 260-2 and 260-3 of FIG. 2B), and a second camera may be referred to as a gaze tracking camera (e.g., the gaze tracking camera 260-1 of FIG. 2B). The wearable device 200 may identify a position, a shape, and/or a gesture of a hand by using an image obtained using the first camera. The wearable device 200 may identify a direction of the user's gaze wearing the wearable device 200 by using an image obtained using the second camera. As an example, a direction in which the first camera is directed and a direction in which the second camera is directed may be opposite to each other.

The sensor 430 of the wearable device 200 according to an embodiment may generate electronic information that may be processed by the processor 410 and/or the memory 415 of the wearable device 200 from non-electronic information associated with the wearable device 200. The information may be referred to as sensor data. The sensor 430 may include a global positioning system (GPS) sensor for detecting a geographic location of the wearable device 200, an image sensor, an illumination sensor and/or a time-of-flight (ToF) sensor, and an inertial measurement unit (IMU) for detecting a physical motion of the wearable device 200.

In an embodiment, the communication circuitry 435 of the wearable device 200 may include a hardware component for supporting transmission and/or reception of an electrical signal between the wearable device 200 and an external electronic device. The communication circuitry 435 may include, for example, at least one of a modem (MODEM), an antenna, and an optic/electronic (O/E) converter. The communication circuitry 435 may support transmission and/or reception of an electrical signal based on various types of protocol such as an ethernet, a local area network (LAN), a wide area network (WAN), a wireless fidelity (WiFi), Bluetooth, a bluetooth low energy (BLE), ZigBee, long term evolution (LTE), 5G new radio (NR), and/or 6G.

In the memory 415 of the wearable device 200 according to an embodiment, one or more instructions (or commands) indicating a calculation and/or an operation to be performed by the processor 410 of the wearable device 200 on data may be stored. A set of the one or more instructions may be referred to as firmware, an operating system, a process, a routine, a sub-routine, and/or an application. For example, the wearable device 200 and/or the processor 410 may perform at least one of operations according to an embodiment described below when a set of a plurality of instructions distributed in a form of the operating system, the firmware, a driver, and/or the application is executed. In the following, the application being installed in the wearable device 200 may mean that one or more instructions provided in the form of the application are stored in the memory 415, and that the one or more applications are stored in a format (e.g., a file with an extension designated by the operating system of the wearable device 200) executable by the processor 410. As an example, the application may include a program associated with a service provided to the user and/or a library.

Referring to FIG. 4, programs installed in the wearable device 200 may be classified into any one layer of different layers, including an application layer 440, a framework layer 450, and/or a hardware abstraction layer (HAL) 480 based on a target. For example, programs (e.g., a module or a driver) designed to target hardware (e.g., the display 420, the camera 425, and/or the sensor 430) of the wearable device 200 may be classified in the hardware abstraction layer 480. The framework layer 450 may be referred to as an XR framework layer in that one or more programs for providing an extended reality (XR) service are included. For example, FIG. 4 illustrates layers separately in the memory 415, but the layers may be logically separated. However, it is not limited thereto. According to an embodiment, the layers may also be stored in a designated region in the memory 415.

For example, in the framework layer 450, programs (e.g., a position tracker 471, a space recognizer 472, a gesture tracker 473 and/or a gaze tracker 474, and a face tracker 475) designed to target at least one of the hardware abstraction layer 480 and/or an application layer 440 may be classified. The programs classified into the framework layer 450 may provide an application programming interface (API) that is executable based on another program.

For example, in the application layer 440, programs designed to target the user controlling the wearable device 200 may be classified. As an example of programs classified into the application layer 440, an extended reality (XR) system user interface (UI) and/or an XR application 442 are illustrated, but an embodiment is not limited thereto. For example, the programs (e.g., a software application) classified into the application layer 440 may cause execution of a function supported by the programs classified into the framework layer 450 by calling the application programming interface (API).

For example, based on execution of an XR system UI 441, the wearable device 200 may display one or more visual objects for performing interaction with the user to use a virtual space, on the display 420. A visual object may mean an object that is deployable in a screen for transmission and/or interaction of information, such as a text, an image, an icon, a video, a button, a check box, a radio button, a text box, a slider, and/or a table. A visual object may be referred to as a visual guide, a virtual object, a visual element, a UI element, a view object, and/or a view element. The wearable device 200 may provide a service capable of controlling functions available in the virtual space to the user based on the execution of the XR system UI 441.

Referring to FIG. 4, it is illustrated that a lightweight renderer 443 and/or an XR plug-in 444 are included in the XR system UI 441, but it is not limited thereto. For example, the XR system UI 441 may cause execution of a function supported by the lightweight renderer 443 and/or the XR plug-in 444 included in the framework layer 450.

For example, the wearable device 200 may obtain a resource (e.g., an API, a system process, and/or a library) used to define, generate, and/or execute a rendering pipeline that is allowed for a partial change based on the execution of the lightweight renderer 443. The lightweight renderer 443 may be referred to as a lightweight render pipeline in terms of defining the rendering pipeline, in which the partial change is allowed. The lightweight renderer 443 may include a renderer (e.g., a prebuilt renderer) built before execution of a software application. For example, the wearable device 200 may obtain a resource (e.g., an API, a system process, and/or a library) used to define, generate, and/or execute an entire rendering pipeline based on the execution of the XR plug-in 444. The XR plug-in 444 may be referred to as an open XR native client in terms of defining (or setting) the entire rendering pipeline.

For example, the wearable device 200 may display a screen indicating at least a portion of the virtual space on the display 420 based on execution of the XR application 442. An XR plug-in 444-1 included in the XR application 442 may be referred to the XR plug-in 444 of the XR system UI 441. Among description of the XR plug-in 444-1, description overlapping the description of the XR plug-in 444 may be omitted. The wearable device 200 may cause execution of a virtual space manager 451 based on the execution of the XR application 442.

According to an embodiment, the wearable device 200 may provide a virtual space service based on the execution of the virtual space manager 451. For example, the virtual space manager 451 may include a platform (e.g., an Android platform) for supporting the virtual space service. Based on the execution of the virtual space manager 451, the wearable device 200 may display a posture of a virtual object indicating a posture of the user rendered using data obtained through the sensor 430 on a display. The virtual space manager 451 may be referred to as a composition presentation manager (CPM).

For example, the virtual space manager 451 may include a runtime service 452. As an example, the runtime service 452 may be referred to as an OpenXR runtime module. The wearable device 200 may be used to provide at least one of a pose prediction function of the user, a frame timing function, and/or a space input function through the wearable device 200 based on execution of the runtime service 452. As an example, the wearable device 200 may be used to perform rendering for the virtual space service to the user based on the execution of the runtime service 452. For example, an application (e.g., unity or an OpenXR native application) may be implemented based on the execution of the runtime service 452.

For example, the virtual space manager 451 may include a pass-through manager 453. While displaying a screen indicating a virtual space on the display 420 based on execution of the pass-through manager 453, the wearable device 200 may overlap and display another screen indicating a real space obtained through the camera 425 on at least a portion of the screen.

For example, the virtual space manager 451 may include an input manager 454. The wearable device 200 may identify data (e.g., sensor data) obtained by executing one or more programs included in a perception service layer 470 based on execution of the input manager 454. The wearable device 200 may start executing at least one of the functions of the wearable device 200 by using the obtained data.

For example, a perception abstract layer 460 may be used for data exchange between the virtual space manager 451 and the perception service layer 470. In terms of being used for the data exchange between the virtual space manager 451 and the perception service layer 470, the perception abstract layer 460 may be referred to as an interface. As an example, the perception abstract layer 460 may be referred to as an OpenPX. The perception abstract layer 460 may be used for a perception client and a perception service.

According to an embodiment, the perception service layer 470 may include one or more programs for processing data obtained from the sensor 430 (or the camera 425). The one or more programs may include at least one of the position tracker 471, the space recognizer 472, the gesture tracker 473, the gaze tracker 474, and/or the face tracker 475. A type and/or the number of one or more programs included in the perception service layer 470 is not limited to as illustrated in FIG. 4.

For example, the wearable device 200 may identify a posture of the wearable device 200 using the sensor 430 based on execution of the position tracker 471. Based on the execution of the position tracker 471, the wearable device 200 may identify a 6 degrees of freedom pose (6 dof pose) of the wearable device 200 by using data obtained using the camera 425 and the IMU. The position tracker 471 may be referred to as a head tracking (HeT) module.

For example, the wearable device 200 may be used to configure a surrounding environment of the wearable device 200 (or the user of the wearable device 200) in a 3-dimensional virtual space based on execution of the space recognizer 472. Based on the execution of the space recognizer 472, the wearable device 200 may reconstruct the surrounding environment of the wearable device 200 in 3D by using the data obtained using the camera 425. The wearable device 200 may identify at least one of a plane, an inclination, and a step based on the surrounding environment of the wearable device 200 reconstructed in the 3D based on the execution of the space recognizer 472. The space recognizer 472 may be referred to as a scene understanding (SU) module.

For example, the wearable device 200 may be used to identify (or recognize) a pose and/or a gesture of the hand of the user of the wearable device 200 based on execution of the gesture tracker 473. As an example, the wearable device 200 may identify the pose and/or the gesture of the hand of the user using data obtained from the sensor 430 based on the execution of the gesture tracker 473. As an example, the wearable device 200 may identify the pose and/or the gesture of the hand of the user based on data (or image) obtained using the camera, based on the execution of the gesture tracker 473. The gesture tracker 473 may be referred to as a hand tracking (HaT) module and/or a gesture tracking module.

For example, the wearable device 200 may identify (or track) movement of an eye of the user of the wearable device 200 based on execution of the gaze tracker 474. As an example, the wearable device 200 may identify the movement of the eye of the user by using data obtained from at least one sensor based on the execution of the gaze tracker 474. As an example, the wearable device 200 may identify the movement of the eye of the user based on data obtained using a camera (e.g., the gaze tracking camera 260-1 of FIGS. 2A and 2B) and/or an infrared light emitting diode (IR LED) based on the execution of the gaze tracker 474. The gaze tracker 474 may be referred to as an eye tracking (ET) module and/or a gaze tracking module.

For example, the perception service layer 470 of the wearable device 200 may further include the face tracker 475 for tracking a face of the user. For example, the wearable device 200 may identify (or track) the movement of the face of the user and/or a facial expression of the user based on the execution of the face tracker 475. The wearable device 200 may estimate the facial expression of the user based on the movement of the face of the user based on the execution of the face tracker 475. As an example, the wearable device 200 may identify the movement of the face of the user and/or the facial expression of the user based on data (e.g., an image) obtained using the camera based on the execution of the face tracker 475.

For embodiments to be described below, the wearable device 200 of FIG. 4 may be referred. For example, the embodiments to be described below may be performed by the processor 410 of the wearable device 200 of FIG. 4.

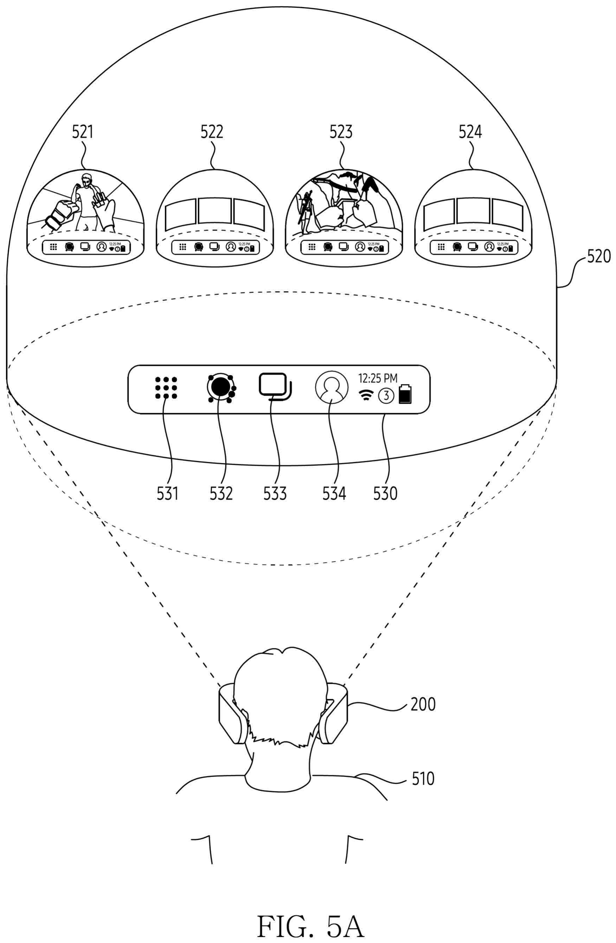

FIG. 5A illustrates an example of a virtual space displayed through a display, according to an embodiment.

Referring to FIG. 5A, a wearable device 200 may include a camera 425 disposed toward a front of a user 510 in a state of being worn by the user 510. The front of the user 510 may include a head of the user 510 and/or a direction in which the user 510's gaze is directed. The wearable device 200 according to an embodiment may include a sensor 430 for identifying the head of the user 510 and/or a motion of the wearable device 200 in a state of being worn by the user 510.

A processor 410 of the wearable device 200 may identify an angle of the wearable device 200 based on data of the sensor 430. In order to provide the user 510 wearing the wearable device 200 with a user interface (UI) based on virtual reality (VR), augmented reality (AR), and/or mixed reality (MR), the processor 410 may control the camera 425, and/or the sensor 430. The UI may be associated with a metaverse service and/or a notification service, provided by the wearable device 200 and/or a server connected to the wearable device 200.

The processor 410 according to an embodiment may execute a function associated with the augmented reality (AR) and/or the mixed reality (MR). In a state that the user 510 wears the wearable device 200, the processor 410 may include at least one lens disposed adjacent to an eye of the user 510. Ambient light passing through the lens may be coupled (or mixed) with light emitted from a display 420 of the wearable device 200. A display region of the display 420 may be formed in the lens through which the ambient light passes. Since the processor 410 couples the ambient light and the light emitted from the display 420, the user 510 may view an image in which a real object recognized by the ambient light and a virtual object formed by the light emitted from the display 420 are mixed.

The wearable device 200 according to an embodiment may execute a function associated with video see-through (VST) and/or the virtual reality (VR). In the state that the user 510 wears the wearable device 200, the wearable device 200 may include a housing covering the eye of the user 510. The wearable device 200 may include the display 420 disposed on a first surface (e.g., the first surface 310 of FIG. 3A) facing the eye in the state. The wearable device 200 may include the camera 425 (or the cameras 260-7, 260-8, 260-9, 260-10, 260-11, and 260-12 of FIG. 3B) disposed on a second surface (e.g., the second surface 320 of FIG. 3A) opposite to the first surface. Using the camera 425, the processor 410 may obtain frame images in which ambient light is included. The processor 410 may enable the user 510 to recognize the ambient light through the display 420 by outputting the frame images to the display 420 disposed on the first surface. A display region of the display 420 disposed on the first surface may be formed by one or more pixels included in the display 420. The processor 410 may synthesize the virtual object in the frame images outputted through the display 420 to enable the user 510 to recognize the virtual object together with the real object recognized by the ambient light.

The wearable device 200 according to an embodiment may provide a user experience based on the mixed reality (MR) by using a virtual space. The processor 410 of the wearable device 200 may generate a virtual space mapped to an external space by recognizing the external space (e.g., a real space) in which the wearable device 200 is included. Space recognition performed by the processor 410 may include a simultaneous localization and mapping (SLAM) and/or a space mapping (e.g., a scene understanding).

According to an embodiment, the processor 410 may display (or provide) a virtual space 520 through the display 420. For example, the virtual space 520 may be set to indicate at least one virtual space. For example, the virtual space 520 may be referred to as a home space. The user 510 of the processor 410 may identify visual objects corresponding to virtual spaces displayed in the virtual space 520.

For example, the processor 410 may display the virtual space 520 through the display 420 based on identifying an input related to a start of a service related to the virtual space to the user 510. The user 510 (or an avatar corresponding to a user) may execute at least one of a plurality of applications that may be provided through the wearable device 200 in the virtual space 520.

For example, the processor 410 may provide at least one virtual space. As an example, the processor 410 may provide not only the virtual space 520, but also a first virtual space, a second virtual space, a third virtual space, and a fourth virtual space. A visual object 521 may correspond to the first virtual space. A visual object 522 may correspond to the second virtual space. A visual object 523 may correspond to the third virtual space. A visual object 524 may correspond to the fourth virtual space.

According to an embodiment, the processor 410 may switch the virtual space provided to the user 510 based on an input for the visual object corresponding to the virtual space. For example, the processor 410 may switch the virtual space provided to the user 510 from the virtual space 520 to the first virtual space based on an input for the visual object 521 corresponding to the first virtual space. For example, the processor 410 may provide the first virtual space through the display 420 based on the input for the visual object 521 corresponding to the first virtual space.

According to an embodiment, the processor 410 may display (or provide) an object 530 in the virtual space 520. The processor 410 may display the object 530 on a designated region in the virtual space 520. The processor 410 may display the object 530 on a designated region independently of a motion of the user 510. For example, the designated region may not be a fixed region in the virtual space 520. A position of the designated region may be changed in the virtual space 520 according to the user's gaze. Even in a case that the user 510's gaze moves, the processor 410 may display the object 530 at the same position in a portion (or a screen displayed through the display 420) of the virtual space 520 identified by the user 510. According to an embodiment, the processor 410 may maintain the display of the object 530 even in a case that the virtual space provided (or displayed) to the user 510 is changed from the virtual space 520.

According to an embodiment, the processor 410 may conditionally display the object 530 based on the user 510's gaze. The processor 410 may display the object 530 in response to a designated speech of the user 510 and/or a gesture of pressing a button formed in the wearable device 200.

According to an embodiment, the object 530 may be referred to as one of a menu, a universal menu, a task bar, and a state bar.

For example, the processor 410 may display one or more elements (or icons) indicating a state of the wearable device 200 in the object 530. For example, the processor 410 may display an element indicating a state of charge (SOC) of a battery included in the wearable device 200 in the object 530. The processor 410 may display an element indicating a type (e.g., a WiFi, an LTE, and 5G and/or 6G) of network to which the wearable device 200 is connected in the object 530. The processor 410 may display an element indicating a current time and/or a text in the object 530. The processor 410 may display an element 534 for displaying account information of the user 510 logged in the wearable device 200 in the object 530.

According to an embodiment, the processor 410 may display options for controlling a virtual space provided through a display region in the object 530.

For example, the processor 410 may display an element 531 for displaying a list of application installed in the wearable device 200 in the object 530. In response to detecting a gaze and/or a finger of the user 510 facing the element 531 beyond a designated period of time, the processor 410 may identify an input indicating selection of the element 531. In response to the input, the processor 410 may display a list of application corresponding to the element 531.

For example, the processor 410 may display an element 532 for displaying a list of one or more virtual spaces provided (or generated) by the wearable device 200 in the object 530. Based on detecting a gesture (e.g., a gaze and/or a finger of the user 510 toward the element 532) for selecting the element 532, the processor 410 may display a list (e.g., the visual object 521 or the visual object 524) of the one or more virtual spaces.

For example, the processor 410 may display an element 533 for displaying a list of applications being executed in the virtual space provided through the display region in the object 530.

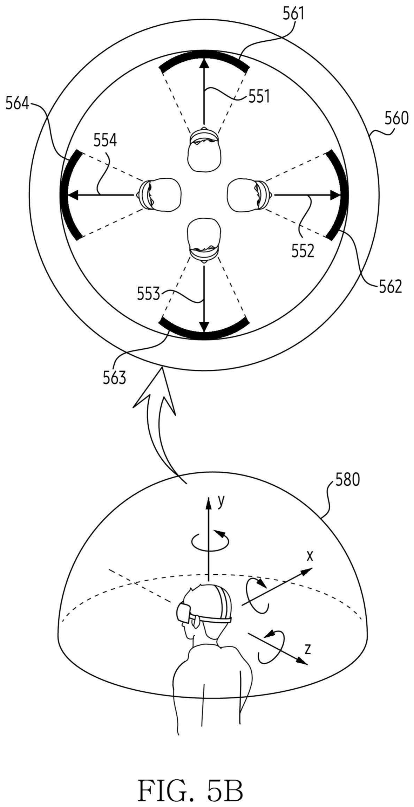

FIG. 5B illustrates an example of a portion of a virtual space displayed according to a direction of a user's gaze, according to an embodiment.

Referring to FIG. 5B, a processor 410 may identify a motion of a user using a sensor 430. For example, the processor 410 may identify a motion of a part (e.g., a head) of a body of the user. The processor 410 may identify a 6 degrees of freedom pose (6 dof pose) of a wearable device 200 by using the sensor 430.

For example, the processor 410 may identify the direction of the user's gaze according to a rotational direction of the wearable device 200. The processor 410 may identify rotation of the wearable device 200 with respect to one of an x-axis, a y-axis, and a z-axis.

As an example, the processor 410 may identify rotation of the wearable device 200 with respect to the x-axis. The processor 410 may identify pitching (or nodding) of the head of the user based on the rotation of the wearable device 200 identified with respect to the x-axis.

As an example, the processor 410 may identify rotation of the wearable device 200 with respect to the y-axis. The processor 410 may identify yawing (or shaking) of the head of the user based on the rotation of the wearable device 200 identified with respect to the y-axis.

As an example, the processor 410 may identify rotation of the wearable device 200 with respect to the z-axis. The processor 410 may identify rolling (or tilting) of the head of the user based on the rotation of the wearable device 200 identified with respect to the z-axis.

According to an embodiment, since a virtual space 580 is configured in 3D, the processor 410 may not display all of the virtual space 580 through a display 420. Accordingly, the processor 410 may display a portion of the virtual space 580 based on the direction of the user's gaze.

For example, the processor 410 may identify the direction of the user's gaze in the virtual space 580. In FIG. 5B, for convenience of description, an example in which the direction of the user's gaze is changed with respect to the y-axis is illustrated, but it is not limited thereto.

For example, the processor 410 may identify that the direction of the user's gaze in the virtual space 580 is a direction 551. The processor 410 may display a first portion 561 of the virtual space 580 through the display 420 based on the direction 551.

For example, the processor 410 may identify that the direction of the user's gaze in the virtual space 580 is a direction 552. The processor 410 may display a second portion 562 of the virtual space 580 through the display 420 based on the direction 552.

For example, the processor 410 may identify that the direction of the user's gaze in the virtual space 580 is a direction 553. The processor 410 may display a third portion 563 of the virtual space 580 through the display 420 based on the direction 553.

For example, the processor 410 may identify that the direction of the user's gaze in the virtual space 580 is a direction 554. The processor 410 may display a fourth portion 564 of the virtual space 580 through the display 420 based on the direction 554.

In the above-described embodiment, an example in which a portion of the virtual space 580 is displayed with respect to the four directions 551, 552, 553, and 554 is illustrated, but it is exemplary, the direction of the user's gaze may be continuously configured. Based on the direction of the user's gaze that is continuously changed, the processor 410 may continuously change a portion of the virtual space 580 displayed through the display 420.

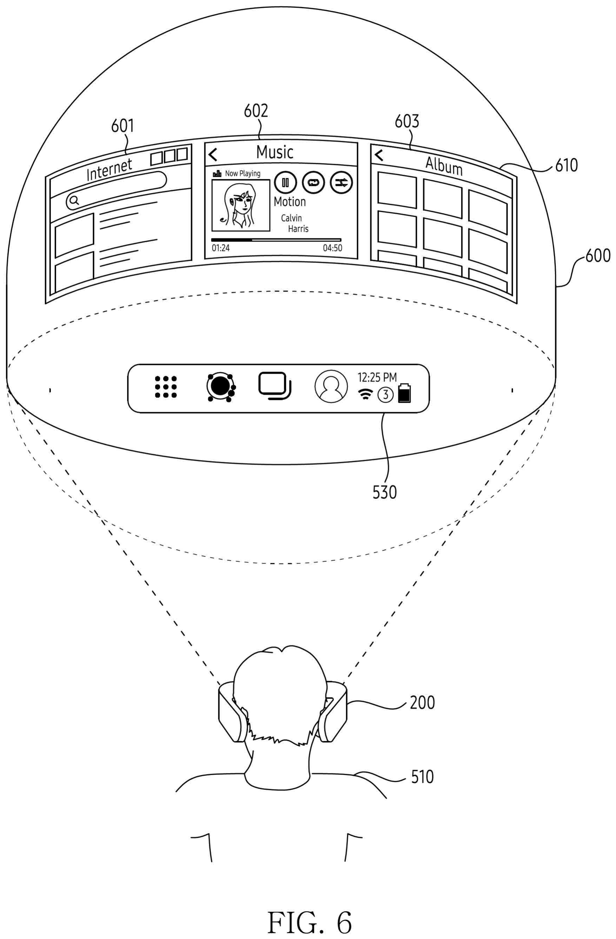

FIG. 6 illustrates an example of a virtual space for executing at least one application, according to an embodiment.

Referring to FIG. 6, a processor 410 may provide a user 510 with a virtual space 600. The virtual space 600 may include a visual object 610 for at least one interface related to at least one applications. The visual object 610 may be used to provide the at least one interface related to the at least one applications. For example, the visual object 610 may be referred to as a dash (or a dashboard).

The processor 410 may display an interface related to an application in the visual object 610. For example, the processor 410 may display a first interface 601, a second interface 602, and a third interface 603 in the visual object 610. The first interface 601 may be associated with a first application. The second interface 602 may be associated with a second application. The third interface 603 may be associated with a third application.

The processor 410 may simultaneously execute one or more applications in the virtual space 600. The processor 410 may display one or more interfaces related to the one or more applications being executed in the visual object 610 included in the virtual space 600. The user 510 of a wearable device 200 may simultaneously identify (or use) the one or more applications in the visual object 610.

According to an embodiment, the processor 410 may display an object 530 in the virtual space 600. For example, the object 530 may correspond to the object 530 illustrated in FIG. 5.

According to an embodiment, the virtual space 600 may be associated with a work environment of the user 510. The processor 410 may provide the user 510 with a high-productivity experience by providing at least one of an infinite screen, a multi-window, and/or a 3D object in the virtual space 600.

According to an embodiment, the processor 410 may display an external electronic device connected to the wearable device 200 in the virtual space 600. For example, the processor 410 may display the external electronic device based on a video see through (VST) and/or an optical see through (OST). The processor 410 may provide the user 510 with a multi device experience (MDE) by displaying the external electronic device in the virtual space 600.

According to an embodiment, the processor 410 may provide the user 510 with a function for changing at least one of an object, illumination, a theme, and/or an environment in the virtual space 600. The processor 410 may provide the user 510 with an option that may personalize the virtual space 600.

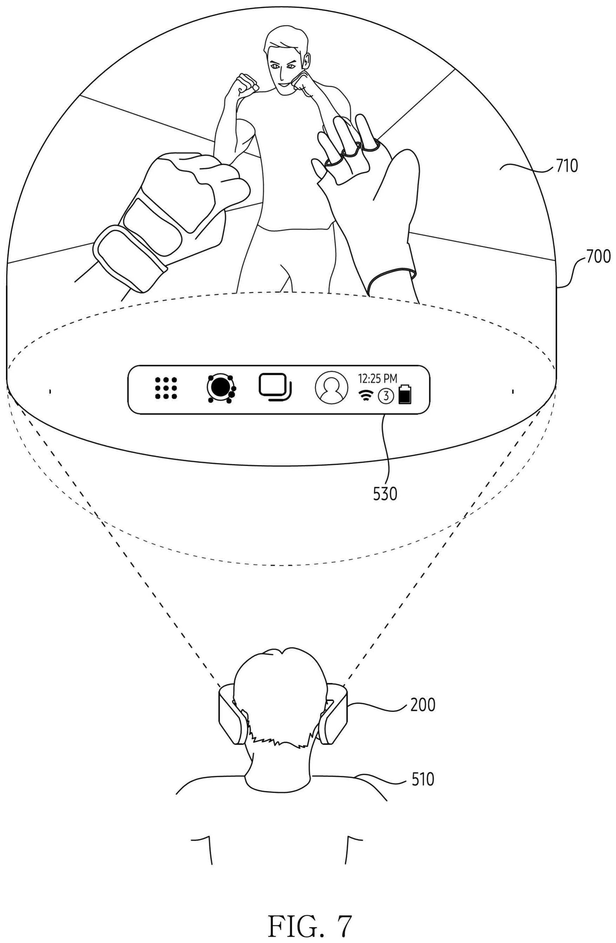

FIG. 7 illustrates an example of a virtual space for providing an interface related to an application, according to an embodiment.

Referring to FIG. 7, a processor 410 may provide a user 510 with a virtual space 700. For example, the virtual space 700 may be configured to provide an interface 710 related to a designated application.

For example, the processor 410 may provide the virtual space 700 based on execution of the designated application. For example, the virtual space 700 may be associated with one application.

According to an embodiment, use of another application may be restricted in the virtual space 700. The processor 410 may display an element for switching a virtual space for the use of the other application through an object 530. The processor 410 may switch the virtual space 700 to another virtual space (e.g., the virtual space 600 of FIG. 6) based on an input to the element, and display an interface related to the other application.

According to an embodiment, the processor 410 may not provide information on the other application while providing the interface 710 related to one application through the virtual space 700. The user 510 may not switch the virtual space 700 to the other virtual space in the virtual space 700 and may not check the information on the other application. Accordingly, in the following specification, an embodiment for displaying information (e.g., an interface or execution information) on an application being executed in the other virtual space (e.g., the virtual space 600 of FIG. 6) in the virtual space 700 will be described.

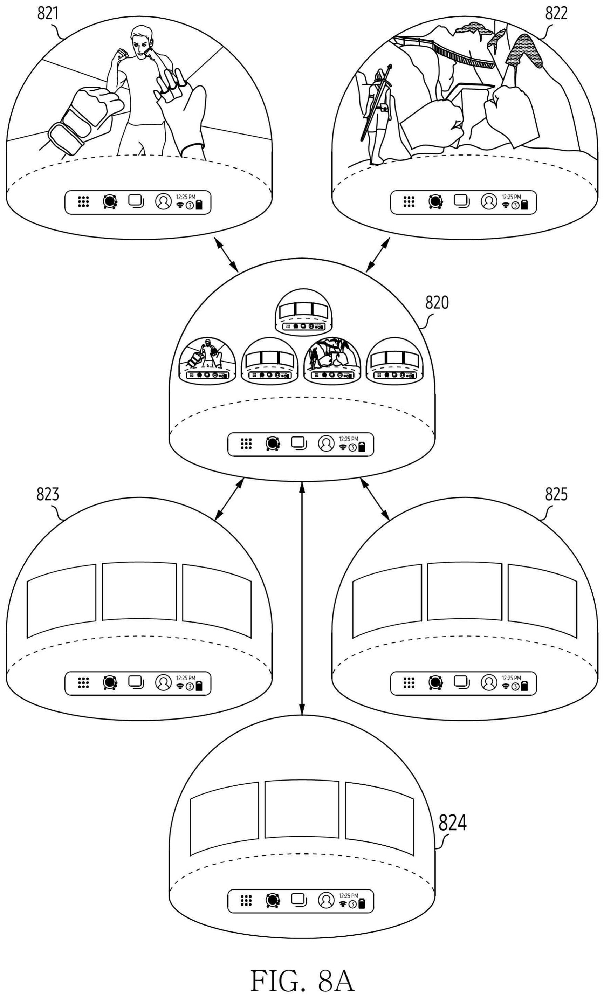

FIG. 8A illustrates an example in which a virtual space is switched, according to an embodiment.

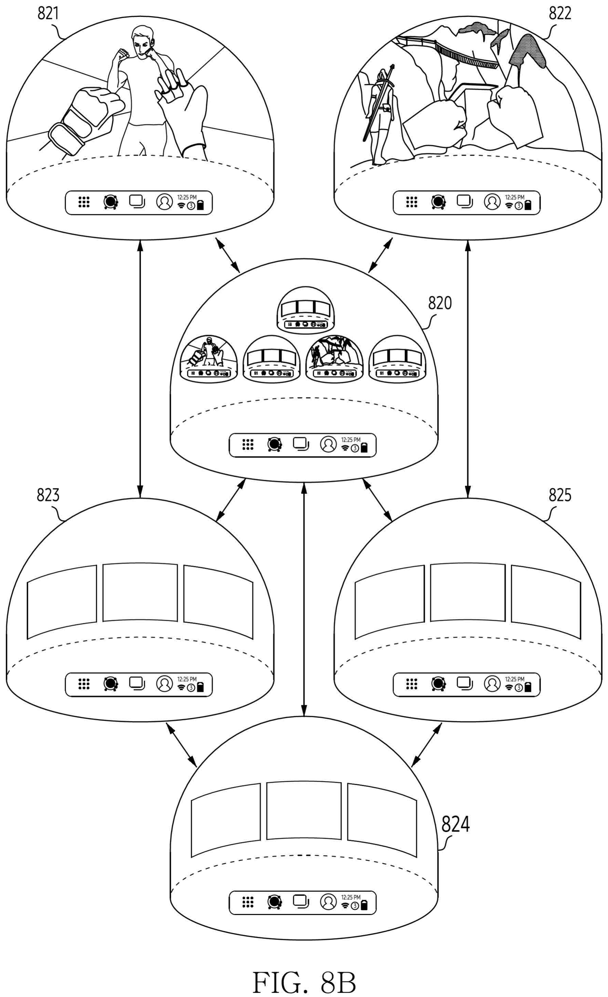

FIG. 8B illustrates an example in which a virtual space is switched, according to an embodiment.

Referring to FIGS. 8A and 8B, a processor 410 of a wearable device 200 may provide a user 510 with a plurality of virtual spaces. For example, the processor 410 may provide the user 510 with a virtual space 820 or a virtual space 825.

The processor 410 may provide a function for moving the plurality of virtual spaces. For example, the processor 410 may display the virtual space 820 (or a portion of the virtual space 820), which is an initial screen, through a display 420. The virtual space 820 may correspond to the virtual space 520 illustrated in FIG. 5A.

For example, each of a virtual space 821 and a virtual space 822 may be configured to provide an interface related to one application. Each of the virtual space 821 and the virtual space 822 may correspond to the virtual space 700 of FIG. 7. For example, each of a virtual space 823, a virtual space 824, and the virtual space 825 may correspond to the virtual space 600 of FIG. 6.

Referring to FIG. 8A, the processor 410 may provide a path for providing one of other virtual spaces in the virtual space 820. For example, the processor 410 may display a visual object corresponding to each virtual space in the virtual space 820. Based on identifying an input for a visual object corresponding to the virtual space 821, the processor 410 may switch a virtual space displayed through the display 420 from the virtual space 820 to the virtual space 821. For example, in order to switch the virtual space displayed through the display 420 from the virtual space 821 to the virtual space 823, the processor 410 may receive, from the user 510, an input for switching the virtual space displayed through the display 420 from the virtual space 821 to the virtual space 820. After the virtual space displayed through the display 420 is switched to the virtual space 820, the processor 410 may receive an input for switching the virtual space displayed through the display 420 from the virtual space 820 to the virtual space 823. The processor 410 may display the virtual space 823 through the display 420 based on the input for switching the virtual space displayed through the display 420 from the virtual space 820 to the virtual space 823. Accordingly, the processor 410 may always have to move to the virtual space 820 in order to switch the virtual space.

Referring to FIG. 8B, unlike FIG. 8A, the processor 410 may provide a function for switching a virtual space without going through the virtual space 820. For example, the processor 410 may display the virtual space 823 without displaying the virtual space 820 based on identifying an input for switching the virtual space displayed through the display 420 from the virtual space 821 to the virtual space 823.

Although not illustrated, it is certain that the virtual space 825 may be moved from the virtual space 821 based on identifying an input for switching the virtual space displayed through the display 420 from the virtual space 821 to the virtual space 825.

According to the following embodiment, the processor 410 may switch virtual spaces without going through the virtual space 820 corresponding to a home virtual space as illustrated in FIG. 8B.

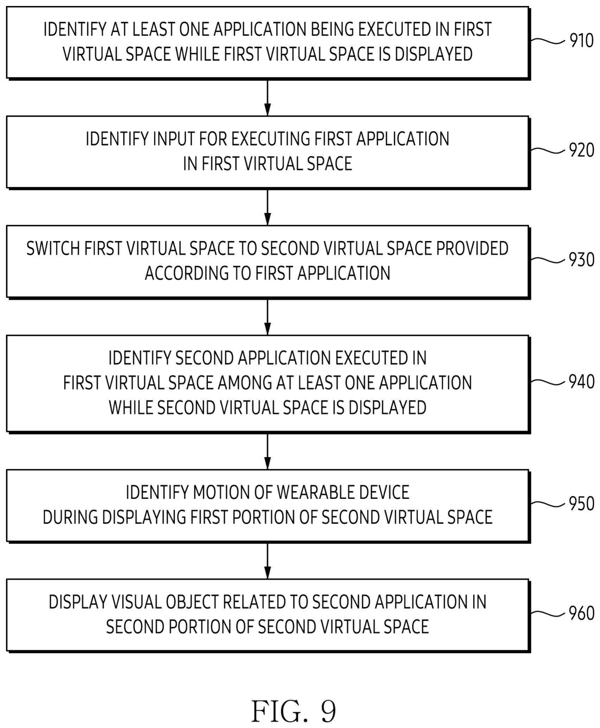

FIG. 9 illustrates a flowchart related to an operation of a wearable device according to an embodiment. In the following embodiment, each operation may also be sequentially performed, but is not necessarily performed sequentially. For example, an order of each operation may also be changed, and at least two operations may also be performed in parallel.

Referring to FIG. 9, in operation 910, a processor 410 may identify at least one application being executed in a first virtual space while the first virtual space is displayed. For example, the first virtual space may be configured to execute the at least one application. For example, the first virtual space may correspond to the virtual space 600 illustrated in FIG. 6. The processor 410 may execute the at least one application in the first virtual space. For example, the processor 410 may display at least one interface related to the at least one application being executed in the first virtual space. For example, the first virtual space may be configured to include at least one regions for executing the at least one application. The processor 410 may display a visual object (e.g., the visual object 610 of FIG. 6) including the at least one regions in the first virtual space.

In operation 920, the processor 410 may identify an input for executing a first application in the first virtual space. For example, the input for executing the first application may be an input for switching a virtual space displayed through a display 420 from the first virtual space to a second virtual space provided according to the first application. For example, the first application may be distinguished from the at least one application. For example, the input may be referred to as an input for switching from the first virtual space to the second virtual space related to the first application.

For example, the input may be variously set. The input may be performed through a part of a body of a user, an external device (e.g., a remote controller, another wearable device, a keyboard, and a mouse), and/or a voice input.

In operation 930, the processor 410 may switch the first virtual space to the second virtual space provided according to the first application. For example, the processor 410 may switch the first virtual space to the second virtual space provided according to the first application based on the execution of the first application. For example, the processor 410 may execute the first application based on the input for executing the first application. The processor 410 may display the second virtual space provided through the first application based on the execution of the first application.

For example, the second virtual space may be associated with the first application. The second virtual space may be configured to provide an interface related to the first application. For example, the first application may provide an interface configured in all directions of 360 degrees. For example, the first application may provide an interface configured based on a designated viewing angle. For example, the second virtual space may correspond to the virtual space 700 illustrated in FIG. 7.

In operation 940, the processor 410 may identify a second application executed in the first virtual space among the at least one application while the second virtual space is displayed.

According to an embodiment, the second application executed while the second virtual space is displayed among the at least one application may be identified. For example, the processor 410 may identify the second application executed while the second virtual space is displayed among at least one application that has been executed in the first virtual space.

For example, the processor 410 may identify an application executed in a background among the at least one application that has been executed in the first virtual space. Among the at least one application, the second application may operate in the background even in a case that the virtual space is switched. As an example, a portion of the at least one application may be terminated in a case that the virtual space is switched.

In operation 950, the processor 410 may identify a motion of a wearable device 200 during displaying a first portion of the second virtual space. For example, the processor 410 may identify the motion of the wearable device 200 during displaying the first portion of the second virtual space based on a first direction.

According to an embodiment, the processor 410 may display the first portion of the second virtual space based on the first direction. For example, the first direction may be referred to as a front direction. The processor 410 may display the first portion of the second virtual space based on identifying the input for switching from the first virtual space to the second virtual space.

For example, the processor 410 may not display all of the second virtual space through the display 420. Accordingly, the processor 410 may identify that a direction in which the user's gaze is directed is the first direction. The processor 410 may display the first portion of the second virtual space based on the first direction.

According to an embodiment, the processor 410 may identify the motion of the wearable device 200. The processor 410 may identify the motion of the wearable device 200 using a sensor 430 (e.g., a gyro sensor or an inertial sensor). The motion of the wearable device 200 may be associated with the motion of the wearable device 200 described in FIG. 5B.

For example, the processor 410 may identify rotation of the wearable device 200 with respect to the y-axis illustrated in FIG. 5B. The processor 410 may identify yawing of the wearable device 200 (or a head of the user).

In operation 960, the processor 410 may display a visual object related to the second application in the second portion of the second virtual space. For example, the processor 410 may display the visual object related to the second application in the second portion of the second virtual space based on a second direction changed from the first direction according to the motion of the wearable device 200.

According to an embodiment, the processor 410 may identify the second direction changed from the first direction according to the motion of the wearable device 200. The processor 410 may identify that a field of view (FoV) of the user is changed from a first FoV to a second FoV. The processor 410 may display the first portion of the second virtual space based on the first FoV. The processor 410 may display the second portion of the second virtual space based on the second FoV.

The processor 410 may display the visual object related to the second application in the second portion of the second virtual space. For example, the visual object related to the second application may include one of an interface related to the second application, a visual object indicating a function of the second application, or a visual object for moving to the first virtual space in which the second application is executed.

According to an embodiment, the visual object related to the second application may include the interface related to the second application. The processor 410 may display the interface related to the second application being executed in the first virtual space in the second portion of the second virtual space. The processor 410 may provide continuity between the virtual spaces based on a user 510 displaying the interface related to the second application being executed in the first virtual space, even in the second virtual space.

For example, the interface related to the second application may be set to be the same as or similar to the interface displayed in the first virtual space. For example, the interface related to the second application may be configured as a reduced interface. As an example, the processor 410 may display the interface related to the second application in a form of a pop-up window. For example, the interface related to the second application may be transparently displayed in the second virtual space related to the first application. The processor 410 may display the interface related to the second application in a layer different from the second virtual space. The processor 410 may display the interface related to the second application in the second virtual space in a state of not limiting a field of view for the second virtual space.

According to an embodiment, the visual object related to the second application may include the visual object indicating the function of the second application. For example, the second application may be configured to perform an alarm function. The processor 410 may display a clock-shaped visual object indicating the alarm function in the second virtual space. For example, the second application may be set to perform a music playback function. The processor 410 may display a visual object in a form of a note (or a play button) indicating the music playback in the second virtual space.

For example, the processor 410 may display the interface related to the second application being executed in the first virtual space, in the second virtual space, based on an input for the visual object.

According to an embodiment, the visual object related to the second application may include the visual object for moving to the first virtual space in which the second application is executed. The processor 410 may switch a virtual space displayed through the display 420 from the first virtual space to the second virtual space based on an input for the visual object related to the second application.

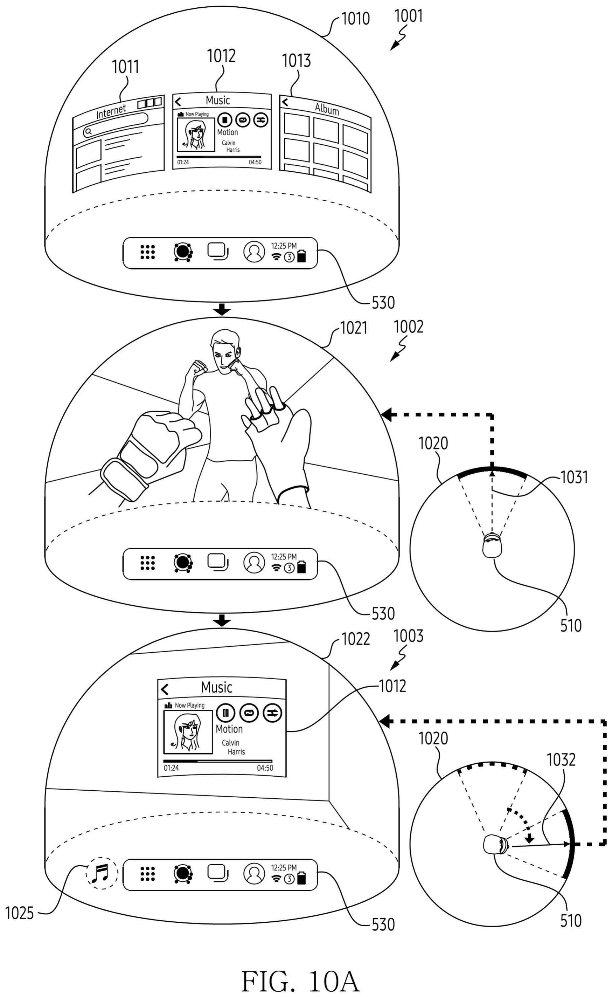

FIG. 10A illustrates an example of an operation of a wearable device for displaying a visual object related to a second application in a second virtual space, according to an embodiment.

Referring to FIG. 10A, in a state 1001, a processor 410 may display a first virtual space 1010 (or a portion of the first virtual space 1010). The processor 410 may identify at least one application being executed in the first virtual space 1010. The processor 410 may display at least one interface related to the at least one application. The processor 410 may display an interface 1011, an interface 1012, and an interface 1013. According to an embodiment, the processor 410 may display an object 530 in the first virtual space 1010.

According to an embodiment, the processor 410 may identify an input for switching from the first virtual space 1010 to a second virtual space 1020 related to a first application. The processor 410 may identify the second application executed while the second virtual space is displayed based on identifying the input. For example, the object 530 may include an element for switching to the second virtual space 1020 (or an element for executing the first application). The processor 410 may identify the second application executed while the second virtual space 1020 is displayed based on identifying an input to the element.

For example, the second application may be an application corresponding to the interface 1012. For example, the second application may be executed while the second virtual space 1020 is displayed. The second application may be executed in a background while the second virtual space 1020 is displayed. As an example, among at least one application that has been executed in the first virtual space 1010, a remaining applications except for the second application may not be executed while the second virtual space 1020 is displayed.

For example, the object 530 in the first virtual space 1010 may include an element corresponding to the first application. Based on identifying an input to the element corresponding to the first application, the processor 410 may identify the input for switching from the first virtual space 1010 to the second virtual space 1020 related to the first application. The input may be performed through a part of a body of a user, an external device (e.g., a remote controller, another wearable device, a keyboard, and a mouse), and/or a voice input.

According to an embodiment, the processor 410 may change a state of a wearable device 200 from the state 1001 to a state 1002 based on identifying the input for switching from the first virtual space 1010 to the second virtual space 1020.

In the state 1002, the processor 410 may display a first portion 1021 of the second virtual space 1020 based on a first direction 1031. The processor 410 may identify that a user 510's gaze of the wearable device 200 is directed in the first direction 1031. The processor 410 may identify the first portion 1021 of the second virtual space 1020 based on the first direction 1031. The processor 410 may display the identified first portion 1021 of the second virtual space 1020 through a display 420.

For example, the processor 410 may display the object 530 in the first portion 1021 of the second virtual space 1020. In the state 1001, the processor 410 may also display the object 530 displayed in the first virtual space 1010 in the second virtual space 1020.

According to an embodiment, the processor 410 may identify a motion of the wearable device 200. The processor 410 may identify a second direction 1032 changed from the first direction 1031 according to the motion of the wearable device 200. The processor 410 may identify that a direction of the user's gaze is changed from the first direction 1031 to the second direction 1032 based on the motion of the wearable device 200. The processor 410 may change the state of the wearable device 200 from the state 1002 to a state 1003 based on the motion of the wearable device 200.

In the state 1003, the processor 410 may display a visual object 1025 related to the second application in a second portion 1022 of the second virtual space 1020, based on the second direction 1032. In the state 1003, the processor 410 may also display the object 530 displayed in the first portion 1021 of the second virtual space 1020 in the second portion 1022 of the second virtual space 1020.

For example, the second application may include an application for music playback. The processor 410 may display the visual object 1025 based on the function of the second application. In FIG. 10A, an example in which the visual object 1025 is displayed in a case that the second application is the application for the music playback is illustrated, but is not limited thereto. The second application may be one of an application for an alarm, an application for schedule management, and an application for document work. As an example, in a case that the second application is the application for the alarm, a shape of the visual object 1025 may be set to a shape of an alarm clock. As an example, in a case that the second application is the application for the schedule management, the shape of the visual object 1025 may be set to a shape of a calendar. As an example, in a case that the second application is the application for the document work, the shape of the visual object 1025 may be set to a shape of a document.

According to an embodiment, the processor 410 may identify an input for the visual object 1025. Based on identifying the input for the visual object 1025, the processor 410 may display the interface 1012 related to the second application within a designated region in the second portion 1022 of the second virtual space 1020. The processor 410 may display the interface 1012 related to the second application executed in the first virtual space 1010 in the second virtual space 1020 (or the second portion 1022 of the second virtual space 1020). The processor 410 may provide a function to the user 510 to control the second application in the second virtual space 1020 by displaying the interface 1012 related to the second application executed in the first virtual space 1010 in the second virtual space 1020 (or the second portion 1022 of the second virtual space 1020).

According to an embodiment, the processor 410 may identify the input for the visual object 1025. Based on identifying the input for the visual object 1025, the processor 410 may perform a switch from the second virtual space 1020 to the first virtual space 1010 in which the second application is executed. Based on identifying the input for the visual object 1025, the processor 410 may change a virtual space displayed through the display 420 from the second virtual space 1020 to the first virtual space 1010. For example, based on identifying the input for the visual object 1025, the processor 410 may change the state of the wearable device 200 from the state 1003 to the state 1001. The processor 410 may display the interface 1012 related to the second application in the first virtual space 1010. According to an embodiment, the processor 410 may display not only the interface 1012 but also the interface 1011 and the interface 1013 in the first virtual space 1010.

According to an embodiment, the visual object 1025 may be disposed at a fixed position in the second virtual space 1020. The processor 410 may identify that an avatar corresponding to the user 510 is positioned on the visual object 1025. The processor 410 may switch the virtual space displayed through the display 420 from the second virtual space 1020 to the first virtual space 1010 based on identifying that the avatar corresponding to the user 510 is positioned on the visual object 1025. For example, the processor 410 may provide the user 510 with a notification indicating whether to switch the virtual space based on identifying that the avatar corresponding to the user 510 is positioned on the visual object 1025. Based on identifying an input indicating the switch of the virtual space from the user 510, the processor 410 may switch the virtual space displayed through the display 420 from the second virtual space 1020 to the first virtual space 1010. The processor 410 may perform a space transition by switching the virtual space displayed through the display 420 from the second virtual space 1020 to the first virtual space 1010. The processor 410 may switch the virtual space displayed through the display 420 from the second virtual space 1020 to the first virtual space 1010 without going through the home virtual space corresponding to the virtual space 820 illustrated in FIG. 8A.

According to an embodiment, the processor 410 may display a visual object (not illustrated) including the interface 1011, the interface 1012, and the interface 1013 in the second portion 1022 of the second virtual space 1020. The processor 410 may display interfaces being executed in the first virtual space 1010 distinct from the second virtual space 1020, in the second portion 1022 of the second virtual space 1020.

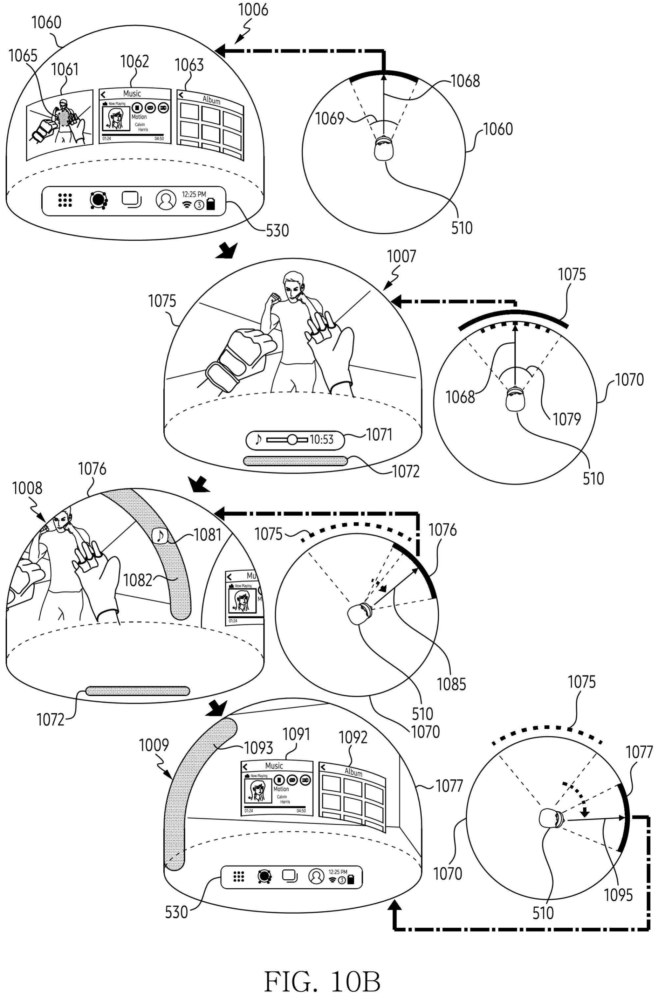

FIG. 10B illustrates an example of an operation of a wearable device for displaying a visual object related to a second application in a second virtual space, according to an embodiment.

Referring to FIG. 10B, in a state 1006, a processor 410 may display a first virtual space 1060 (or a portion of the first virtual space 1060). The processor 410 may identify at least one application being executed in the first virtual space 1060. The processor 410 may display at least one interface related to the at least one application. The processor 410 may display an interface 1061, an interface 1062, and an interface 1063. According to an embodiment, the processor 410 may display an object 530 in the first virtual space 1060. For example, a position at which the object 530 is displayed may be variously set. As an example, the object 530 may be displayed in at least one of an edge region or an upper region of a virtual space (e.g., the first virtual space 1060).

For example, the processor 410 may display the first virtual space 1060 (or the portion of the first virtual space 1060) based on a direction 1068. The processor 410 may identify that a direction of a user's gaze is the direction 1068, and display the first virtual space 1060 based on a viewing angle 1069. According to an embodiment, a size of the viewing angle 1069 may be changed based on at least one of a type of a virtual space or a type of an application to be executed.

According to an embodiment, the processor 410 may identify an input 1065 for switching from the virtual space 1060 to a second virtual space 1070 related to a first application.

For example, the input 1065 may include an input to the interface 1061 related to the first application. For example, the input 1065 may be performed through an external electronic device (e.g., a controller) connected to a wearable device 200. For example, the input 1065 may be performed through a part of a body of the user of the wearable device 200, an external device (e.g., a remote controller, another wearable device, a keyboard, and a mouse), and/or a voice input.

According to an embodiment, the processor 410 may identify the second application executed while the second virtual space 1070 is displayed based on identifying the input 1065 for the interface 1061.

For example, the second application may be an application corresponding to the interface 1062. For example, the second application may be executed in the first virtual space 1060 while the second virtual space 1070 is displayed. The second application may be executed in a background while the second virtual space 1070 is displayed. As an example, among at least one application that has been executed in the first virtual space 1060, a remaining applications except for the second application may not be executed while the second virtual space 1070 is displayed.

According to an embodiment, the processor 410 may change a state of the wearable device 200 from the state 1006 to a state 1007 based on identifying the input 1065.

In the state 1007, the processor 410 may display a first portion 1075 of the second virtual space 1070 based on the direction 1068. The processor 410 may identify that a user 510's gaze of the wearable device 200 is directed in the direction 1068. The processor 410 may identify the first portion 1075 of the second virtual space 1070 based on the direction 1068. The processor 410 may display the identified first portion 1075 of the second virtual space 1070 through a display 420. For example, the processor 410 may change a viewing angle for displaying the first portion 1075 of the second virtual space 1070 based on identifying the input 1065 for the interface 1061. The processor 410 may set the viewing angle for displaying the first portion 1075 of the second virtual space 1070 as a viewing angle 1079. As an example, the processor 410 may change the viewing angle to be wider based on execution of the first application. The processor 410 may provide the wider viewing angle (e.g., the viewing angle 1079) for displaying the second virtual space 1070 switched from the first virtual space 1060 for displaying at least one application.

For example, the processor 410 may identify the second application being executed in the first virtual space 1060 in the first portion 1075 of the second virtual space 1070. The processor 410 may display an object 1071 related to the second application being executed in the first virtual space 1060 in the first portion 1075 of the second virtual space 1070. The user of the wearable device 200 may control the second application being executed in the first virtual space 1060 by using the object 1071.

For example, the processor 410 may remove the object 530 that has been displayed in the virtual space 1060 in the first portion 1075 of the second virtual space 1070. The processor 410 may display an object 1072 in which the object 530 is reduced. Although not illustrated, the processor 410 may display the object 530 in the first portion 1075 of the second virtual space 1070 based on an input for the object 1072. Although not illustrated, the processor 410 may display the object 530 in the first portion 1075 of the second virtual space 1070 based on identifying that the user's gaze is positioned on the object 1072.

According to an embodiment, the processor 410 may identify a motion of the wearable device 200. The processor 410 may identify a direction 1085 changed from the direction 1068 according to the motion of the wearable device 200. The processor 410 may identify that the direction of the user's gaze is changed from the direction 1068 to the direction 1085 based on the motion of the wearable device 200. The processor 410 may change the state of the wearable device 200 from the state 1007 to a state 1008 based on the motion of the wearable device 200. According to an embodiment, the processor 410 may change the state of the wearable device 200 from the state 1007 to the state 1008 based on the direction of the user's gaze being rotated beyond a threshold angle.

In the state 1008, the processor 410 may display a second portion 1076 of the second virtual space 1070. The processor 410 may display the second portion 1076 of the second virtual space 1070 while a screen is switched from the first portion 1075 of the second virtual space 1070 to a third portion 1077 of the second virtual space 1070.

In the state 1008, the second portion 1076 of the second virtual space 1070 may include a portion of the first portion 1075 and a portion of the third portion 1077. For example, the processor 410 may highlight a region 1082 indicating an outer periphery of the first portion 1075. For example, the processor 410 may highlight the region 1082 by changing a color of the region 1082 based on a gradation technique.

The processor 410 may display, within the region 1082, an object 1081 related to the second application being executed in the first virtual space 1060. The processor 410 may remove the object 1071 and display the object 1081 in the region 1082 while the screen is switched from the first portion 1075 of the second virtual space 1070 to the third portion 1077 of the second virtual space 1070. For example, the processor 410 may maintain the display of the object 1072 while the screen is switched from the first portion 1075 of the second virtual space 1070 to the third portion 1077 of the second virtual space 1070.

According to an embodiment, the processor 410 may identify a direction 1095 changed from the direction 1085 according to the motion of the wearable device 200. The processor 410 may identify that the direction of the user's gaze is changed from the direction 1085 to the direction 1095. The processor 410 may change the state of the wearable device 200 from the state 1008 to a state 1009 based on identifying that the direction of the user's gaze is changed from the direction 1085 to the direction 1095.

In the state 1009, the processor 410 may display the third portion 1077 of the second virtual space 1070. The processor 410 may display at least one interface displayed in the first virtual space 1060 in the third portion 1077 of the second virtual space 1070. For example, the processor 410 may display an interface 1091 corresponding to the interface 1062 in the third portion 1077 of the second virtual space 1070. The processor 410 may display an interface 1092 corresponding to the interface 1063 in the third portion 1077 of the second virtual space 1070. For example, the processor 410 may display remaining interfaces of the interface 1061, the interface 1062, and the interface 1063 displayed in the state 1006, except for the interface 1061 corresponding to the first application currently being executed. Accordingly, the processor 410 may display the interface 1091 corresponding to the interface 1062 and the interface 1092 corresponding to the interface 1063 in the third portion 1077 of the second virtual space 1070.

For example, the processor 410 may display at least one interface (e.g., the interface 1091 and the interface 1092) related to at least one application executed (or being executed) in the first virtual space 1060 in the third portion 1077 of the second virtual space 1070 that is distinct from the first portion 1075 of the second virtual space 1070 for displaying a function related to the first application.

According to an embodiment, the processor 410 may display an interface (e.g., the interface 1091) related to the second application being executed in the first virtual space 1060 in the third portion 1077 of the second virtual space 1070.

According to an embodiment, the processor 410 may highlight a region 1093 indicating an outer periphery of the third portion 1077 in order to indicate that a screen related to the first application is being displayed in the first portion 1075 of the second virtual space 1070. For example, by changing a color of the region 1093, the processor 410 may highlight the region 1093 indicating the outer periphery of the third portion 1077. For example, the processor 410 may change the color of the region 1093 based on the gradation technique.

According to an embodiment, the processor 410 may display the object 530 in the third portion 1077 of the second virtual space 1070. The processor 410 may remove the object 1072 and display the object 530.

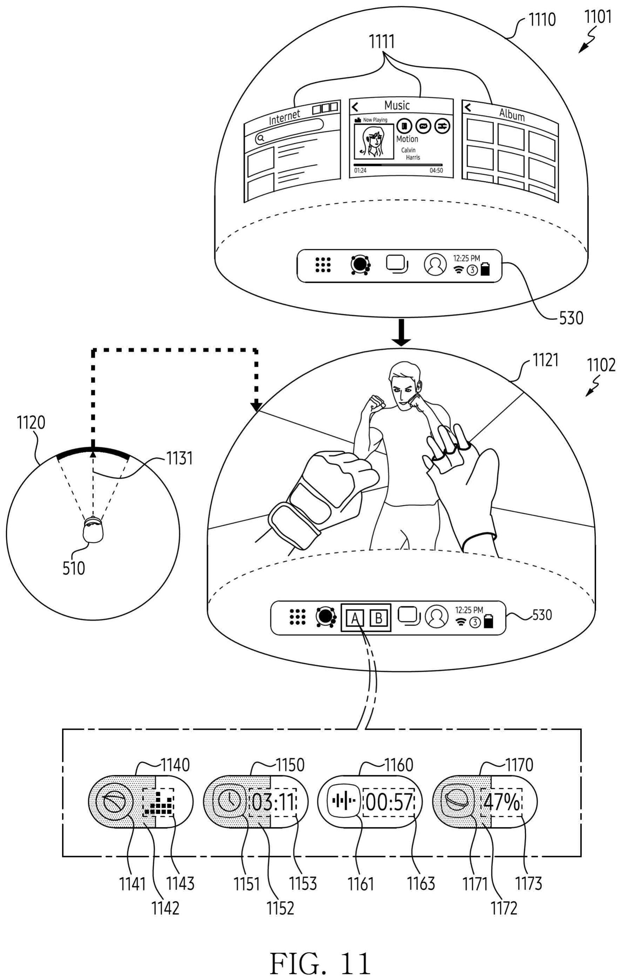

FIG. 11 illustrates an example of an operation of a wearable device for displaying a visual object related to a second application in a second virtual space, according to an embodiment.

Referring to FIG. 11, in a state 1101, a processor 410 may display a first virtual space 1110 through a display 420. For example, the processor 410 may identify at least one application being executed in the virtual space 1110. The processor 410 may display at least one interface 1111 related to the at least one application. The state 1101 may correspond to the state 1001 of FIG. 10A.

According to an embodiment, the processor 410 may identify an input for switching from the virtual space 1110 to a second virtual space 1120 related to a first application. The processor 410 may identify the second application executed while the second virtual space is displayed based on identifying the input.

According to an embodiment, the processor 410 may change a state of a wearable device 200 from the state 1101 to a state 1102 based on identifying the input for switching from the first virtual space 1110 to the second virtual space 1120.

In the state 1102, the processor 410 may display a first portion 1121 of the second virtual space 1120 based on a first direction 1131. The processor 410 may identify that a user 510's gaze of the wearable device 200 is directed in the first direction 1131. The processor 410 may identify the first portion 1121 of the second virtual space 1120 based on the first direction 1131. The processor 410 may display the identified first portion 1121 of the second virtual space 1120 through the display 420.

According to an embodiment, the processor 410 may display the object 530 in the first portion 1121 of the second virtual space 1120. The processor 410 may display, on a designated region in the first portion 1121 of the second virtual space 1120, the object 530 including one or more elements (e.g., an element 1140, an element 1150, an element 1160, and an element 1170) related to one or more applications being executed in one or more virtual spaces (e.g., the first virtual space 1110) distinct from the second virtual space 1120. For example, an element may be referred to as an affordance, an on-going affordance, or a visual object related to a function of an application.

For example, the processor 410 may display the object 530 in the first virtual space 1110. Based on identifying that a virtual space displayed through the display 420 is changed from the first virtual space 1110 to the second virtual space 1120, the processor 410 may display the one or more elements (e.g., the element 1140, the element 1150, the element 1160, and the element 1170) related to the one or more applications being executed in the one or more virtual spaces (e.g., the first virtual space 1110) distinct from the second virtual space 1120 on the object 530.

For example, the processor 410 may identify an application being executed in the first virtual space 1110, which is one of the one or more virtual spaces distinct from the second virtual space 1120. The processor 410 may display an element related to the application being executed in the first virtual space 1110 in the object 530.

According to an embodiment, each of the one or more elements may be displayed based on execution information of an application. As an example, each of the one or more elements may be displayed based on at least one of a type of the application, a function of the application, a progress rate of the function of the application, an operation time, and a time remaining until completion of a performance of the operation.

For example, the application being executed in the first virtual space 1110 may be an alarm (or clock) application. The processor 410 may display the element 1140 related to the alarm application being executed in the first virtual space 1110 in the object 530. As an example, the element 1140 may include an image 1141 indicating a music playback application, an indicator 1142 corresponding to a timeline of the played music, and an image 1143 indicating that the music is being played. As an example, the indicator 1142 may be displayed as overlapping on the image 1141 and the image 1143.

For example, the application being executed in the first virtual space 1110 may be an alarm (or clock) application. The processor 410 may display the element 1150 related to the alarm application being executed in the first virtual space 1110 in the object 530. As an example, the element 1150 may include an image 1151 indicating the alarm application, an indicator 1152 indicating a ratio of a remaining time to a set time, and a text 1153 indicating the remaining time. As an example, the indicator 1152 may be displayed as overlapping on the image 1151 and the text 1153.

For example, the application being executed in the first virtual space 1110 may be an audio recording (or video recording) application. The processor 410 may display an element 1160 related to the audio recording (or video recording) application being executed in the first virtual space 1110 in the object 530. As an example, the element 1160 may include an image 1161 indicating the audio recording (or video recording) application and a text 1163 indicating a time at which an audio recording (or a video recording) was performed.

For example, the application being executed in the first virtual space 1110 may be an Internet application. The processor 410 may display the element 1170 related to the Internet application being executed in the first virtual space 1110 in the object 530. As an example, the element 1170 may include an image 1171 indicating the Internet application, an indicator 1172 indicating a progress degree of content being downloaded through an Internet, and a text 1173 indicating a remaining time. As an example, the indicator 1172 may be displayed as overlapping on the image 1171 and the text 1173.

As in the above-described example, the processor 410 may identify the one or more applications being executed in the one or more virtual spaces distinct from the second virtual space 1120. For example, the processor 410 may identify the one or more applications being executed in a background while the second virtual space 1120 is displayed. The processor 410 may display the one or more elements related to the one or more applications in the object 530 displayed on a designated region in the first portion 1121 of the second virtual space 1120.

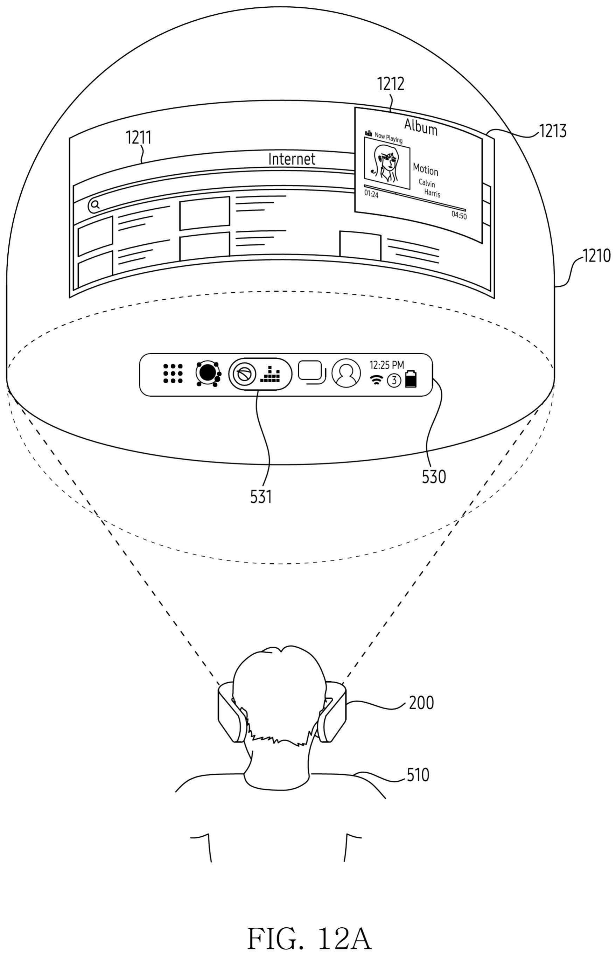

FIG. 12A illustrates an example of an operation of a wearable device for displaying a visual object related to a second application in a second virtual space, according to an embodiment.

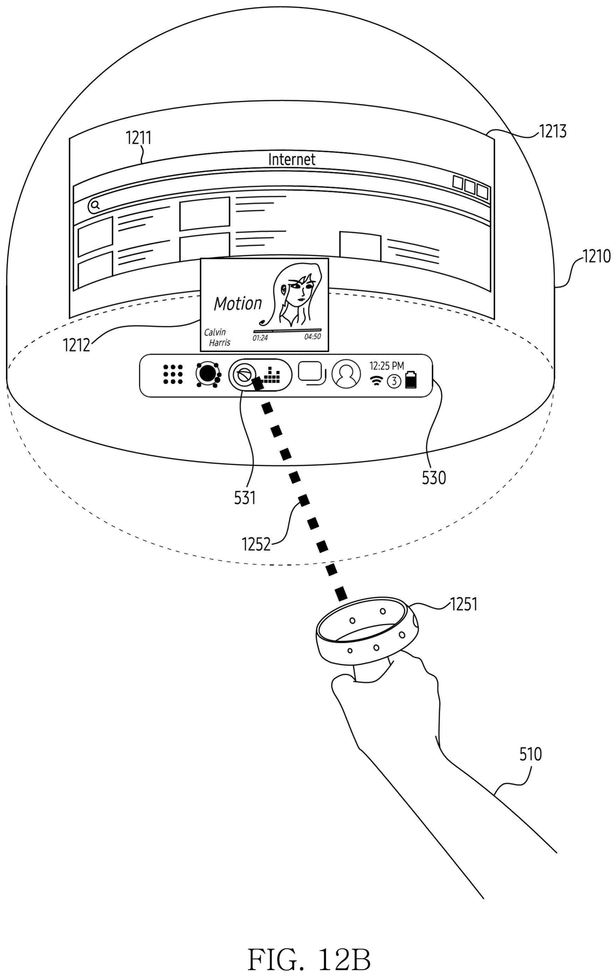

FIG. 12B illustrates an example of an operation of a wearable device for displaying a visual object related to a second application in a second virtual space, according to an embodiment.

Referring to FIG. 12A, a processor 410 may display a second virtual space 1210. The processor 410 may display an interface 1211 related to a first application in the second virtual space 1210. According to an embodiment, the processor 410 may execute a plurality of applications in the second virtual space 1210. Although not illustrated, the processor 410 may display a plurality of interfaces related to the plurality of applications in the second virtual space 1210.

According to an embodiment, the processor 410 may display an object 530 in the second virtual space 1210. The object 530 may correspond to the object 530 illustrated in FIG. 5A. The processor 410 may identify the second application being executed in a first virtual space (not illustrated) distinct from the second virtual space 1210. For example, the processor 410 may execute the second application in a background during displaying the second virtual space 1210. The processor 410 may display an element 531 related to the second application being executed during displaying the second virtual space 1210 in the object 530.

For example, the processor 410 may indicate that the second application in a virtual space different from the second virtual space 1210 is being executed in the background by displaying the element 531 in the object 530.

According to an embodiment, the processor 410 may identify an input to the element 531. The processor 410 may display an interface 1212 related to the second application corresponding to the element 531 based on the input to the element 531.

For example, the processor 410 may display the interface 1212 related to the second application based on one of a prompt user interface (UI), a pop-up window, a split screen, and/or a picture in picture (PIP) in response to the input to the element 531. As an example, the processor 410 may display the interface 1212 related to the second application by overlapping the interface 1211 related to the first application displayed in the second virtual space 1210.

As an example, the processor 410 may distinguish a visual object 1213 (e.g., the visual object 610 of FIG. 6) for at least one interface in the second virtual space 1210 in response to the input to the element 531. The processor 410 may divide a region of the visual object 1213 for at least one interface in the second virtual space 1210 into a first region and a second region. The processor 410 may display the interface 1211 related to the first application executed in the second virtual space 1210 within the first region. The processor 410 may display the interface 1212 related to the second application executed in the first virtual space (not illustrated) within the second region.

Referring to FIG. 12B, the processor 410 may identify the input to an element 531 displayed in the object 530. For example, the processor 410 may identify the input to the element 531 through a remote controller 1251. For example, the processor 410 may identify the input to the element 531 through a part (e.g., a hand or a finger) of a body of a user.

For example, the processor 410 may perform communication with the remote controller 1251. The processor 410 may identify a direction 1252 in which the remote controller 1251 is directed based on information received from the remote controller 1251. For example, the information received from the remote controller 1251 may include data on a motion for the remote controller 1251, identified by IMU included in the remote controller 1251. The motion of the remote controller 1251 may be generated by a hand of a user 510 holding the remote controller 1251.

For example, the processor 410 may identify the input to the element 531 based on the direction 1252 in which the remote controller 1251 is directed. The processor 410 may display an object (e.g., a beam) indicating the direction 1252 in which the remote controller 1251 is directed. The processor 410 may identify an input to a button of the remote controller 1251 while the object indicates the element 531. The processor 410 may display the interface 1212 related to the second application in association with the element 531 based on the input to the button of the remote controller 1251. For example, the interface 1212 may be displayed in an upper region of the object 530 in which the element 531 is included. For example, the interface 1212 may be displayed within a region distinct from the visual object 1213.

According to an embodiment, the processor 410 may display the object (e.g., the beam) indicating the direction 1252 in which the remote controller 1251 is directed. The processor 410 may display the interface 1212 related to the second application in association with the element 531 based on the object indicating the element 531. For example, the interface 1212 may be displayed in the upper region of the object 530 in which the element 531 is included.

In FIG. 12B, an operation of performing the input through the remote controller 1251 is illustrated, but it is not limited thereto. Inputs (e.g., the input to the element 531 and an input for switching of a virtual space) identifiable in a wearable device 200 may be performed through at least one of the part of the body of the user, an external device (e.g., a remote controller, another wearable device (e.g., a watch), a keyboard, and a mouse), and/or a voice input.

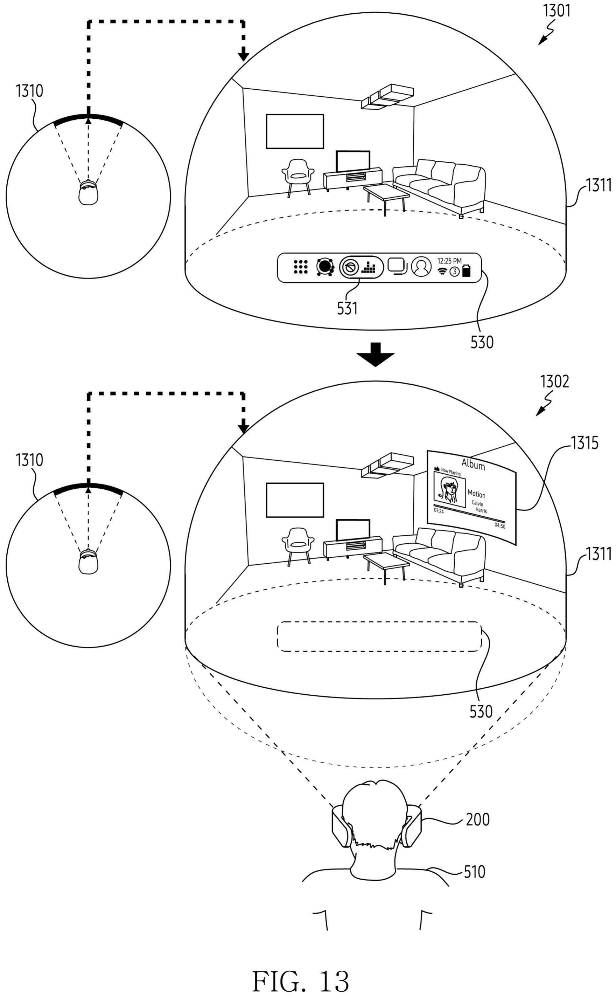

FIG. 13 illustrates an example of an operation of a wearable device for displaying a visual object related to a second application in a second virtual space, according to an embodiment.

Referring to FIG. 13, in a state 1301, a processor 410 may display a first portion 1311 of a second virtual space 1310 through a display 420. The processor 410 may display an object 530 in the first portion 1311 of the virtual space 1310. For example, the object 530 may correspond to the object 530 illustrated in FIG. 5A. For example, the second virtual space 1310 may be provided based on execution of a first application.

According to an embodiment, the processor 410 may identify the second application, executed in another virtual space, distinct from the second virtual space 1310 in the object 530. For example, the processor 410 may identify the second application executed in a background while the second virtual space 1310 is displayed. The processor 410 may display an element 531 related to the second application in the object 530.

According to an embodiment, the processor 410 may identify an input for removing the object 530. For example, the processor 410 may identify an input for removing the display of the object 530 from the first portion 1311 of the second virtual space 1310. For example, the processor 410 may identify an input for hiding the display of the object 530 in the second virtual space 1310.

For example, the processor 410 may change a display mode of the object 530. The processor 410 may set the display mode of the object 530 to one of a normal mode and a hidden mode. Based on changing the display mode of the object 530 from the normal mode to the hidden mode, the processor 410 may not display the object 530 in the second virtual space 1310. According to an embodiment, the processor 410 may display the object 530 in the second virtual space 1310 based on a designated operation (or input).

According to an embodiment, the processor 410 may change a state of the wearable device 200 from the state 1301 to a state 1302 based on identifying the input for removing the object 530.

In the state 1302, the processor 410 may not display the object 530 in the second virtual space 1310, based on the input for removing the object 530. The processor 410 may identify the element 531 included in the object 530. Based on identifying that the element 531 is not displayed with the object 530, the processor 410 may display an interface 1315 related to the second application corresponding to the element 531 in the first portion 1311 of the second virtual space 1310.

For example, the processor 410 may display the interface 1315 related to the second application in the second virtual space 1310 (or the first portion 1311 of the second virtual space 1310) based on identifying that the element 531 indicating that the second application is being executed, is not displayed while the second virtual space 1310 is displayed.

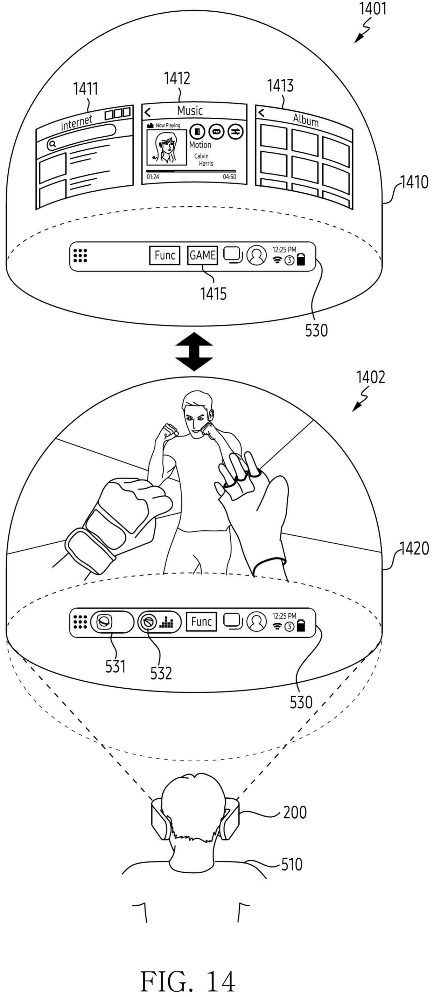

FIG. 14 illustrates an example of an operation of a wearable device for displaying a visual object related to a second application in a second virtual space, according to an embodiment.

Referring to FIG. 14, in a state 1401, a processor 410 may display the first virtual space 1410 (or a portion of the virtual space 1410). The processor 410 may display an interface 1411 related to a first application, an interface 1412 related to the second application, and an interface 1413 related to a third application in the virtual space 1410. The processor 410 may display an object 530 in the virtual space 1410. The object 530 may correspond to the object 530 of FIG. 5A.

For example, the processor 410 may identify an input for switching a first virtual space 1410 to a second virtual space 1420. The object 530 may include an element 1415 for executing a fourth application for providing the second virtual space 1420. Based on an input to the element 1415, the processor 410 may identify the input for switching the first virtual space 1410 to the second virtual space 1420. The processor 410 may change a state of a wearable device 200 from the state 1401 to a state 1402 based on the input for switching the first virtual space 1410 to the second virtual space 1420.

In the state 1402, the processor 410 may display the second virtual space 1420 (or a portion of the second virtual space 1420) through a display 420 based on the execution of the fourth application. The processor 410 may display the object 530 in the second virtual space 1420. The processor 410 may maintain the display of the object 530 even in a case that a virtual space displayed through the display 420 is changed.

For example, the processor 410 may identify an application executed while the second virtual space 1420 is displayed among the first application, the second application, and a third application that has been executed in the first virtual space 1410. The processor 410 may identify that the first application and the second application are executed while the second virtual space 1420 is displayed. The processor 410 may display an element 531 indicating that the first application is being executed in the object 530. The processor 410 may display an element 532 indicating that the second application is being executed in the object 530.

According to an embodiment, the processor 410 may display the first virtual space 1410 based on identifying that the execution of the fourth application providing the second virtual space 1420 ceases. The processor 410 may remove the element 531 and the element 532 in the object 530 in the first virtual space 1410. The processor 410 may display the interface 1411 related to the first application and the interface 1412 related to the second application based on removing the element 531 and the element 532 from the object 530. The processor 410 may display the interface 1413 related to the third application together with the interface 1411 and the interface 1412. For example, the processor 410 may change the state of the wearable device 200 from the state 1402 to the state 1401 based on identifying that the execution of the fourth application providing the second virtual space 1420 ceases.

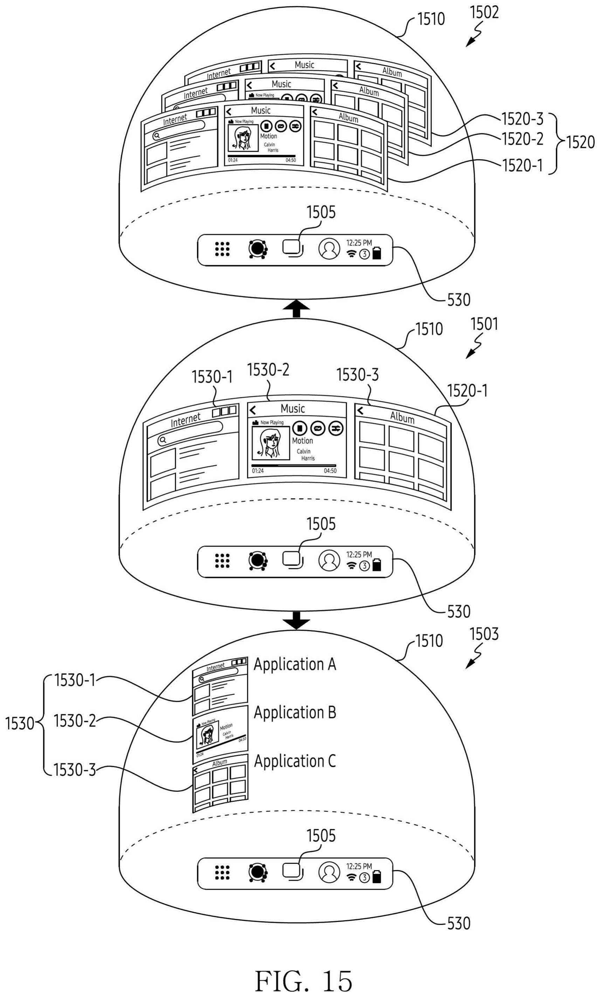

FIG. 15 illustrates an example of an operation of a wearable device for displaying an application being executed in a first virtual space, according to an embodiment.

Referring to FIG. 15, in a state 1501, a processor 410 may display a virtual space 1510 (or a portion of the virtual space 1510) through a display 420. The processor 410 may display an element 1505 for displaying applications being executed in one or more virtual spaces including the virtual space 1510 in an object 530.

According to an embodiment, the processor 410 may identify an input to the element 1505. The processor 410 may change a state of a wearable device 200 from the state 1501 to one of a state 1502 and a state 1503 according to a setting value of the wearable device 200.

In the state 1502, the processor 410 may display one or more visual objects 1520 in the virtual space 1510, based on identifying the input to the element 1505. For example, the one or more visual objects 1520 may include a visual object 1520-1, a visual object 1520-2, and a visual object 1520-3. As an example, the visual object 1520-1 may correspond to a visual object for providing at least one interface in the virtual space 1510. As an example, each of the visual object 1520-2 and the visual object 1520-3 may correspond to a visual object for providing at least one interface in another virtual space distinct from the virtual space 1510. For example, each of the one or more visual objects 1520 may display at least one interface related to at least one application being executed. As an example, the visual object 1520-1 may include at least one interface related to at least one applications being executed in the virtual space 1510 in which the visual object 1520-1 is displayed. As an example, the visual object 1520-2 may include at least one interface related to at least one applications being executed in a virtual space in which the visual object 1520-2 is displayed. As an example, the visual object 1520-3 may include at least one interface related to at least one applications being executed in a virtual space in which the visual object 1520-3 is displayed.

For example, the visual object 1520-1 will be used to provide at least one interface in the virtual space 1510. The visual object 1520-1 may be displayed at the top of the one or more visual objects 1520.

According to an embodiment, the processor 410 may change the virtual space displayed through the display 420 to a virtual space corresponding to the visual object 1520-2 based on identifying an input for the visual object 1520-2. The processor 410 may display the visual object 1520-2 in the changed virtual space.

In the state 1502, the processor 410 may display one or more interfaces 1530 related to one or more applications being executed in the wearable device 200 based on identifying an input to the element 1505. For example, the processor 410 may identify not only applications being executed in the virtual space 1510 but also applications being executed in the other virtual space distinct from the virtual space 1510. The processor 410 may display the one or more interfaces 1530 related to the one or more applications being executed in the wearable device 200. For example, an application corresponding to an interface 1530-1, an interface 1530-2, and an interface 1530-3 may be in a state of being executed in the virtual space 1510. Although not illustrated, the processor 410 may display interfaces of the applications being executed in the other virtual space distinct from the virtual space 1510.

Although not illustrated, according to an embodiment, the processor 410 may display the interfaces related to the applications being executed in the wearable device 200 based on one of a stack, a list, a grid, a carousel, a slim list, and/or a vertical stack.

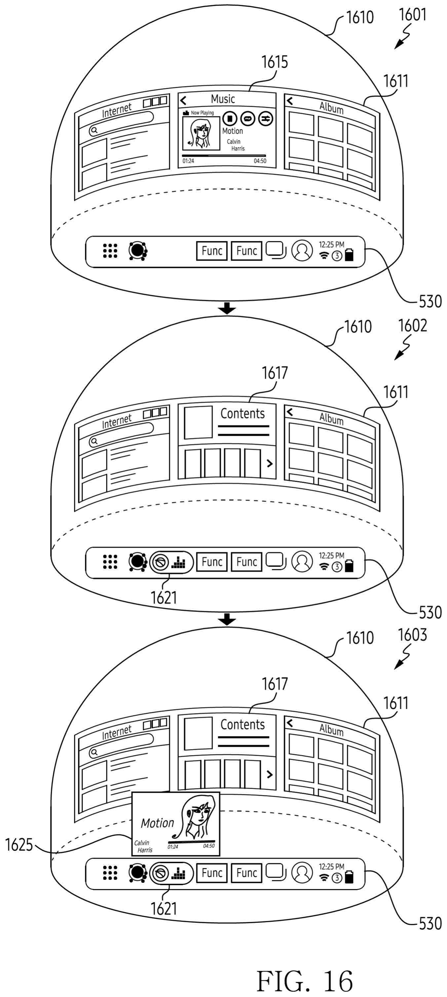

FIG. 16 illustrates an example of an operation of a wearable device for displaying an application being executed in a first virtual space, according to an embodiment.

Referring to FIG. 16, in a state 1601, a processor 410 may display a virtual space 1610 through a display 420. The processor 410 may display a visual object 1611 for displaying at least one interface related to at least one applications being executed in the virtual space 1610. For example, the visual object 1611 may include at least one region for displaying the at least one interface. For example, the processor 410 may display an object 530. As an example, the object 530 may correspond to the object 530 of FIG. 5A.

For example, the visual object 1611 may include an interface 1615 related to a first application. The processor 410 may display the interface 1615 in the visual object 1611 based on execution of the first application. The processor 410 may identify an input for executing a second application while the interface 1615 is displayed in the visual object 1611. The processor 410 may change a state of a wearable device 200 from the state 1601 to a state 1602 based on the input for executing the second application.

In the state 1602, the processor 410 may display an interface 1617 related to the second application in the visual object 1611. For example, the processor 410 may display the interface 1617 on a region in which the interface 1615 is disposed in the state 1601. Based on the execution of the second application, the processor 410 may execute the first application in a background. The processor 410 may remove the interface 1615 from the visual object 1611 based on executing the first application in the background. The processor 410 may display an element 1621 in the object 530 based on executing the first application in the background. The processor 410 may display the element 1621 indicating that the first application is being executed in the background.

According to an embodiment, the processor 410 may identify an input to the element 1621 while the element 1621 is displayed in the object 530. The processor 410 may change the state of the wearable device 200 from the state 1602 to a state 1603 based on the input to the element 1621.

In the state 1603, the processor 410 may display an interface 1625 based on the input to the element 1621. For example, the interface 1625 may be distinguished from the interface 1615 displayed in the state 1601. The processor 410 may display the interface 1625 reduced than the interface 1615 in the virtual space 1610. For example, the interface 1625 may be displayed in association with the element 1621. For example, the interface 1625 may be displayed as overlapping on the visual object 1611. An operation of the processor 410 for displaying the interface 1625 may correspond to the operation of the processor 410 described in FIG. 12B.

According to the above-described embodiment, the processor 410 may execute the first application in the background. The processor 410 may display the element 1621 in the object 530 instead of not displaying the interface 1615 in the visual object 1611 in the virtual space 1610. The processor 410 may display the element 1621 in the object 530 such that a user 510 may identify execution information of the first application without interfering with an operation performed in the virtual space 1610.

According to an embodiment, a wearable device may include a display, at least one sensor, memory, storing instructions, including one or more storage media, and at least one processor including processing circuitry. The instructions, when individually or collectively executed by the at least one processor, may cause the wearable device to, while a first virtual space is displayed, identify at least one application being executed in the first virtual space. The instructions, when individually or collectively executed by the at least one processor, may cause the wearable device to identify an input for executing a first application in the first virtual space. The instructions, when individually or collectively executed by the at least one processor, may cause the wearable device to, based on the execution of the first application, switch the first virtual space to a second virtual space provided according to the first application. The instructions, when individually or collectively executed by the at least one processor, may cause the wearable device to, while the second virtual space is displayed, identify a second application executed in the first virtual space among the at least one application. The instructions, when individually or collectively executed by the at least one processor, may cause the wearable device to identify a motion of the wearable device during displaying a first portion of the second virtual space based on a first direction in which a user's gaze is directed. The instructions, when individually or collectively executed by the at least one processor, may cause the wearable device to display a visual object related to the second application in a second portion of the second virtual space based on a second direction in which the user's gaze is directed changed from the first direction according to the motion of the wearable device.

According to an embodiment, the instructions, when individually or collectively executed by the at least one processor, may cause the wearable device to display, based on identifying an input for the visual object, an interface related to the second application within a designated region in the second portion of the second virtual space.

According to an embodiment, the instructions, when individually or collectively executed by the at least one processor, may cause the wearable device to, based on identifying an input for the visual object, perform a switch from the second virtual space to the first virtual space in which the second application is executed. The at least one processor may cause the wearable device to display an interface related to the second application in the first virtual space.

According to an embodiment, the instructions, when individually or collectively executed by the at least one processor, may cause the wearable device to display an object including one or more elements related to one or more applications being executed in at least one virtual space distinct from the second virtual space on a designated region in the first portion of the second virtual space.

According to an embodiment, the instructions, when individually or collectively executed by the at least one processor, may cause the wearable device to identify an input to an element related to the second application, among the one or more elements. The at least one processor may cause the wearable device to, based on identifying the input to the element, display an interface related to the second application in the first portion in the second virtual space.

According to an embodiment, the element may be displayed based on execution information of an operation related to the second application.

According to an embodiment, the instructions, when individually or collectively executed by the at least one processor, may cause the wearable device to display, based on identifying an input for removing the object, an interface related to the second application in the first portion in the second virtual space.

According to an embodiment, the instructions, when individually or collectively executed by the at least one processor, may cause the wearable device to remove, based on identifying an input for switching from the second virtual space to the first virtual space, the element in the object displayed in the first virtual space.

According to an embodiment, the instructions, when individually or collectively executed by the at least one processor, may cause the wearable device to display, based on the second direction, at least one interface related to the at least one application in the second portion of the second virtual space.

According to an embodiment, the first virtual space may be configured to include at least one region for executing the at least one application. The second virtual space may be configured to provide an interface related to the first application.

According to an embodiment, a method of a wearable device may include, while a first virtual space is displayed, identifying at least one application being executed in the first virtual space. The method may include identifying an input for executing a first application in the first virtual space. The method may include, based on the execution of the first application, switching the first virtual space to a second virtual space provided according to the first application. The method may include, while the second virtual space is displayed, identifying a second application executed in the first virtual space among the at least one application. The method may include identifying a motion of the wearable device during displaying a first portion of the second virtual space based on a first direction in which a user's gaze is directed. The method may include displaying a visual object related to the second application in a second portion of the second virtual space based on a second direction in which the user's gaze is directed changed from the first direction according to the motion of the wearable device.

According to an embodiment, the method may include displaying, based on identifying an input for the visual object, an interface related to the second application within a designated region in the second portion of the second virtual space.

According to an embodiment, the method may include, based on identifying an input for the visual object, performing a switch from the second virtual space to the first virtual space in which the second application is executed. The method may include displaying an interface related to the second application in the first virtual space.

According to an embodiment, the method may include displaying an object including one or more elements related to one or more applications being executed in one or more virtual spaces distinct from the second virtual space on a designated region in the first portion of the second virtual space.

According to an embodiment, the method may include identifying an input to an element related to the second application, among the one or more elements. The method may include, based on identifying the input to the element, displaying an interface of the second application in the first portion in the second virtual space.

According to an embodiment, the element may be displayed based on execution information of an operation related to the second application.

According to an embodiment, the method may include displaying, based on identifying an input for removing the object, an interface related to the second application in the first portion in the second virtual space.

According to an embodiment, the method may include removing, based on identifying an input for switching from the second virtual space to the first virtual space, the element in the object displayed in the first virtual space.

According to an embodiment, the method may include displaying, based on the second direction, at least one interface related to the at least one application in the second portion of the second virtual space.

According to an embodiment, a non-transitory computer readable storage medium may store one or more programs. The one or more programs may include instructions, which, when executed by at least one processor of an electronic device with a display and at least one sensor, cause the wearable device to, while a first virtual space is displayed, identify at least one application being executed in the first virtual space. The one or more programs may include instructions, which, when executed by the at least one processor of the wearable device, cause the wearable device to identify an input for executing a first application in the first virtual space. The one or more programs may include instructions, which, when executed by the at least one processor of the wearable device, cause the wearable device to, based on the execution of the first application, switch the first virtual space to a second virtual space provided according to the first application. The one or more programs may include instructions, which, when executed by the at least one processor of the wearable device, cause the wearable device to, while the second virtual space is displayed, identify a second application executed in the first virtual space among the at least one application. The one or more programs may include instructions, which, when executed by the at least one processor of the wearable device, cause the wearable device to identify a motion of the wearable device during displaying a first portion of the second virtual space based on a first direction in which a user's gaze is directed. The one or more programs may include instructions, which, when executed by the at least one processor of the wearable device, cause the wearable device to display a visual object related to the second application in a second portion of the second virtual space based on a second direction in which the user's gaze is directed changed from the first direction according to the motion of the wearable device.

According to the above-described embodiment, in a case of being switched from the first virtual space to the second virtual space, there is an effect that the virtual space may be directly switched from the first virtual space to the second virtual space without going through a home virtual space. According to the above-described embodiment, in a multitasking environment, there is an effect that information on an application being executed in the first virtual space is displayed in the second virtual space. In a state in which a screen for a task related to the currently being executed application is maintained, there is an effect that the information on the application being executed in the first virtual space is displayed.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable device comprising:
a display;
at least one sensor;
memory, storing instructions, comprising one or more storage media; and
at least one processor comprising processing circuitry, wherein the instructions, when individually or collectively executed by the at least one processor, cause the wearable device to:
while a first virtual space is displayed, identify at least one application being executed in the first virtual space,
identify an input for executing a first application in the first virtual space,
based on the execution of the first application, switch the first virtual space to a second virtual space provided according to the first application,
while the second virtual space is displayed, identify a second application executed in the first virtual space among the at least one application,
identify a motion of the wearable device during displaying a first portion of the second virtual space based on a first direction in which a user's gaze is directed, and
display a visual object related to the second application in a second portion of the second virtual space based on a second direction in which the user's gaze is directed changed from the first direction according to the motion of the wearable device.

2. The wearable device of claim 1, wherein the instructions, when individually or collectively executed by the at least one processor, cause the wearable device to:
display, based on identifying an input for the visual object, an interface related to the second application within a designated region in the second portion of the second virtual space.

3. The wearable device of claim 1, wherein the instructions, when individually or collectively executed by the at least one processor, cause the wearable device to:
based on identifying an input for the visual object, perform a switch from the second virtual space to the first virtual space in which the second application is executed, and
display an interface related to the second application in the first virtual space.

4. The wearable device of claim 1, wherein the instructions, when individually or collectively executed by the at least one processor, cause the wearable device to:
display an object including one or more elements related to one or more applications being executed in at least one virtual space distinct from the second virtual space on a designated region in the first portion of the second virtual space.

5. The wearable device of claim 4, wherein the instructions, when individually or collectively executed by the at least one processor, cause the wearable device to:
identify an input to an element related to the second application, among the one or more elements, and
based on identifying the input to the element, display an interface related to the second application in the first portion in the second virtual space.

6. The wearable device of claim 4, wherein the element is displayed based on execution information of an operation related to the second application.

7. The wearable device of claim 4, wherein the instructions, when individually or collectively executed by the at least one processor, cause the wearable device to display, based on identifying an input for removing the object, an interface related to the second application in the first portion in the second virtual space.

8. The wearable device of claim 4, wherein the instructions, when individually or collectively executed by the at least one processor, cause the wearable device to remove, based on identifying an input for switching from the second virtual space to the first virtual space, the element in the object displayed in the first virtual space.

9. The wearable device of claim 1, wherein the instructions, when individually or collectively executed by the at least one processor, cause the wearable device to display, based on the second direction, at least one interface related to the at least one application in the second portion of the second virtual space.

10. The wearable device of claim 1, wherein the first virtual space is configured to comprise at least one region for executing the at least one application, and
wherein the second virtual space is configured to provide an interface related to the first application.

11. A method of a wearable device comprising:
while a first virtual space is displayed, identifying at least one application being executed in the first virtual space,
identifying an input for executing a first application in the first virtual space,
based on the execution of the first application, switching the first virtual space to a second virtual space provided according to the first application,
while the second virtual space is displayed, identifying a second application executed in the first virtual space among the at least one application,
identifying a motion of the wearable device during displaying a first portion of the second virtual space based on a first direction in which a user's gaze is directed, and
displaying a visual object related to the second application in a second portion of the second virtual space based on a second direction in which the user's gaze is directed changed from the first direction according to the motion of the wearable device.

12. The method of claim 11, wherein the method further comprises displaying, based on identifying an input for the visual object, an interface related to the second application within a designated region in the second portion of the second virtual space.

13. The method of claim 11, wherein the method further comprises:
based on identifying an input for the visual object, performing a switch from the second virtual space to the first virtual space in which the second application is executed, and
displaying an interface related to the second application in the first virtual space.

14. The method of claim 11, wherein the method further comprises:
displaying an object including one or more elements related to one or more applications being executed in one or more virtual spaces distinct from the second virtual space on a designated region in the first portion of the second virtual space.

15. A non-transitory computer readable storage medium storing one or more programs, the one or more programs comprising instructions, which, when executed by at least one processor of a wearable device with a display and at least one sensor, cause the wearable device to:
while a first virtual space is displayed, identify at least one application being executed in the first virtual space,
identify an input for executing a first application in the first virtual space,
based on the execution of the first application, switch the first virtual space to a second virtual space provided according to the first application,
while the second virtual space is displayed, identify a second application executed in the first virtual space among the at least one application,
identify a motion of the wearable device during displaying a first portion of the second virtual space based on a first direction in which a user's gaze is directed, and
display a visual object related to the second application in a second portion of the second virtual space based on a second direction in which the user's gaze is directed changed from the first direction according to the motion of the wearable device.
